# EUROPEAN PATENT APPLICATION

(11) **EP 2 369 419 A2**
(43) Date of publication of application: **28.09.2011**
(21) Application number: 11157320.0
(22) Date of filing: 08.03.2011
(51) Int. Cl.: G03G 15/00, H04N 1/407, H04N 1/60

(54) **Image forming apparatus and image density adjustment method**

(30) Priority: 12.03.2010 JP 2010056205
(71) Applicant: Konica Minolta Business Technologies, Inc., Tokyo 100-0005 (JP)
(72) Inventor: Sakatani, Kazuomi, Tokyo 100-0005 (JP)
(74) Representative: Gille Hrabal Struck Neidlein Prop Roos

(57) **Abstract**

An image forming apparatus including: an image forming section which forms a belt-shaped pattern having a specific gradation and a prescribed length extending in a main-scanning direction; and a control section which receives pieces of density information each of which indicates a density of the belt-shaped pattern at a measurement position of measurement positions; detects a minimum density from the pieces of density information; sets the minimum density as a target density; identifies a first error between the target density and each of densities respectively indicated by the pieces of density information; sets a gradation correction amount at each of the measurement positions, respectively corresponding to the pieces of density information, based on the respective first errors; and corrects a gradation of image data based on the gradation correction amounts, wherein the image forming section forms an image based on the image data of which the gradation is corrected.

## Description

### BACKGROUND OF THE INVENTION

### Field of the Invention

The present invention relates to an image forming apparatus and an image density adjustment method.

### Description of the Related Art

In a conventional electro-photographic image forming apparatus, density unevenness is produced in a main-scanning direction by various factors such as distortion and dirt of an electrifier which electrifies a photoreceptor, distance deviation between the photoreceptor on which a latent image is formed and a developing roller which is used for developing the formed latent image by developer such as toner, and difference of an amount of the developer carried by the developing roller.

To solve the problem, there is known a conventional image forming apparatus which, in order to obtain good gradation performance, includes a built-in sensor, reads a test pattern by the sensor so as to obtain a value, the test pattern being formed on a transfer body such as an intermediate transfer body, and corrects a gradation in such a way that the obtained value becomes a desired value, as described in Japanese Patent Application Laid-open Publication No. 2007-264371 and Japanese Patent Application Laid-open Publication No. 2007-225709.

Also, there is known an image forming apparatus using a linear recording head, the image forming apparatus which corrects image input signals at a position where the density is higher than a target value, and at a position where the density is lower than the target value, as described in Japanese Patent Application Laid-open Publication No. hei 5-24314.

### SUMMARY OF THE INVENTION

As a gradation correction method, there is known a method to be used to reduce the density unevenness in the main-scanning direction, the method by which the density is measured at a plurality of positions in a main-scanning direction, a gradation correction amount for each position is calculated from a density profile obtained by the measurement, and when an image is outputted, image data of which a gradation is corrected based on the calculated gradation correction amount is outputted. In general, the gradation correction amount is calculated for each position by setting, as a target density value, an average value of the density profile obtained by the density measurement at a plurality of positions, by which there is no difference between the target density value and an outputted density result.

However, the image forming apparatuses described in the Japanese Patent Application Laid-open Publications No. 2007-264371, No. 2007-225709, and No. hei 5-24314 cannot properly correct a gradation when the gradation is the maximum gradation. It is because gradation data which can be set is limited to a certain range of parameters (for example, a range of 0 to 255 in a case where the gradation data is eight-bit data) . Therefore, if input gradation data corrected based on the gradation correction amount, which is calculated from the average value of the density profile, is more than the maximum gradation value, such input gradation data neither can be set nor be outputted.

In order to solve at least one problem mentioned above, according to an aspect of the present invention, an image forming apparatus includes: an image forming section which forms a belt-shaped pattern on a sheet, the belt-shaped pattern having a specific gradation and a prescribed length extending in a main-scanning direction; and a control section which (i) receives a plurality of pieces of density information each of which indicates a density of the belt-shaped pattern at a measurement position of a plurality of measurement positions, the belt-shaped pattern being formed on the sheet, (ii) detects a minimum density from the received pieces of density information, (iii) sets the detected minimum density as a target density, (iv) identifies a first error between the set target density and each of densities respectively indicated by the received pieces of density information, (v) sets a gradation correction amount at each of the measurement positions based on the respective first errors, the measurement positions respectively corresponding to the received pieces of density information, and (vi) corrects a gradation of image data based on the set gradation correction amounts, wherein the image forming section forms an image on a sheet based on the image data of which the gradation is corrected.

Preferably, in the image forming apparatus, the control section identifies a second error between a prescribed standard density and the detected minimum density, which is detected from the received pieces of density information, and changes a setting of an image-forming process at the image forming section based on the second identified error.

Preferably, in the image forming apparatus, the image forming section includes: an image holder which holds a toner image; a light source to which the image holder is exposed so that an electrostatic latent image is formed; and a developing section which develops the formed electrostatic latent image by using developer, and the control section changes the setting of the image-forming process by changing an amount of light outputted from the light source.

Preferably, in the image forming apparatus, the image forming section includes: an image holder which holds a toner image; an electrifier which electrifies the image holder; a light source to which the electrified image holder is exposed so that an electrostatic latent image is formed; and a developing section which develops the formed electrostatic latent image by using developer, and the control section changes the setting of the image-forming process by changing an electrification voltage of the electrifier to electrify the image holder.

Preferably, the image forming apparatus further includes: an image density measurement section which measures the density of the belt-shaped pattern formed on the sheet at each of the measurement positions, and outputs the pieces of density information as a result of the measurement, wherein the control section receives the pieces of density information outputted from the image density measurement section.

Preferably, in the image forming apparatus, the image density measurement section includes: a measurement light source; and a light receiving section, wherein light outputted from the measurement light source is inputted into the light receiving section by reflecting the light by the belt-shaped pattern formed on the sheet, and the density of the belt-shaped pattern formed on the sheet is measured at each of the measurement positions by measuring an amount of the light inputted into the light receiving section.

Preferably, the image forming apparatus further includes: a carrying section by which a sheet is carried, the sheet on which an image is formed, wherein the image density measurement section measures the density of the belt-shaped pattern formed on the sheet which is being carried by the carrying section.

Preferably, in the image forming apparatus, the image forming apparatus is capable of communicating with an image density measurement device which reads the belt-shaped pattern formed on the sheet, measures the density of the belt-shaped pattern at each of the measurement positions, and outputs the pieces of density information as a result of the measurement, and the control section receives the pieces of density information outputted from the image density measurement device.

Preferably, in the image forming apparatus, the specific gradation is a maximum gradation among gradations which are capable of being set.

Preferably, in the image forming apparatus, the image forming section forms a plurality of belt-shaped patterns on a sheet, the belt-shaped patterns having gradations different from each other, and the control section, with regard to each of the gradations different from each other, (i) receives the pieces of density information, (ii) detects the minimum density, (iii) sets the detected minimum density as the target density, (iv) identifies the first error between the set target density and each of the densities respectively indicated by the received pieces of density information, (v) sets the gradation correction amount, and (vi) corrects the gradation of the image data.

Preferably, in the image forming apparatus, the control section interpolates a gradation correction amount into between the gradation correction amounts at the respective measurement positions which respectively correspond to the received pieces of density information, and thereby sets the gradation correction amount at a position other than the measurement positions which respectively correspond to the received pieces of density information.

### BRIEF DESCRIPTION OF THE DRAWINGS

The present invention is understood fully from the detailed description given hereinbelow and the accompanying drawings, which are given by way of illustration only, and thus are not intended as a definition of the limits of the present invention, and wherein:
FIG. 1 shows an inner structure of an image forming apparatus according to a first embodiment of the present invention;
FIG. 2 is a block diagram showing a functional structure of the image forming apparatus;
FIG. 3 is a block diagram showing a functional structure of an image forming section of the image forming apparatus;
FIG. 4A is an explanatory diagram for density measurement of a test pattern formed on a sheet of paper;
FIG. 4B is a schematic lateral view of an image density measurement section of the image forming apparatus;
FIG. 5 is a flow chart showing steps of density balance adjustment processing;
FIG. 6 shows a test pattern formed on a sheet of paper;
FIG. 7 shows a test pattern formed on a sheet of paper;
FIG. 8 is a table for explaining a density profile;
FIG. 9A is a table for explaining the density profile;
FIG. 9B is a table for explaining a target density value;
FIG. 10 is a graph showing a measured density value to an input gradation;
FIG. 11 is a table in which a gradation correction amount is stored;
FIG. 12 is a table for explaining a corrected input gradation;
FIG. 13A is a table for explaining gradation correction by using interpolation;
FIG. 13B is a table for explaining the gradation correction by using interpolation;
FIG. 14A is a table for explaining the density profile according to another mode in the first embodiment of the present invention;
FIG. 14B is a table for explaining the target density value according to another example in the first embodiment of the present invention;
FIG. 15A shows an external appearance of a color measurement device;
FIG. 15B is an enlarged plane view of an image density measurement section of the color measurement device;
FIG. 15C is a schematic lateral view of a measurement main body of the image density measurement section;
FIG. 16 is a flow chart showing steps of the density balance adjustment processing according to a second embodiment of the present invention;
FIG. 17 shows a test pattern formed on a sheet of paper;
FIG. 18 shows a test pattern formed on a sheet of paper;
FIG. 19 shows a test pattern formed on a sheet of paper;
FIG. 20A is a table for explaining the density profile;
FIG. 20B is a table for explaining the density profile;
FIG. 20C is a table for explaining the density profile;
FIG. 21A is a table for explaining an interleaved density profile;
FIG. 21B is a table for explaining the target density value;
FIG. 22 is a graph showing the measured density value to the input gradation;
FIG. 23 is a table in which the gradation correction amount is stored; and
FIG. 24 is a table for explaining the corrected input gradation.

### DESCRIPTION OF THE PREFERRED EMBODIMENT

### [First Embodiment]

Hereinafter, a first embodiment of the present invention is described in detail referring to the accompanying drawings. However, the scope of the present invention is not limited to the drawings.

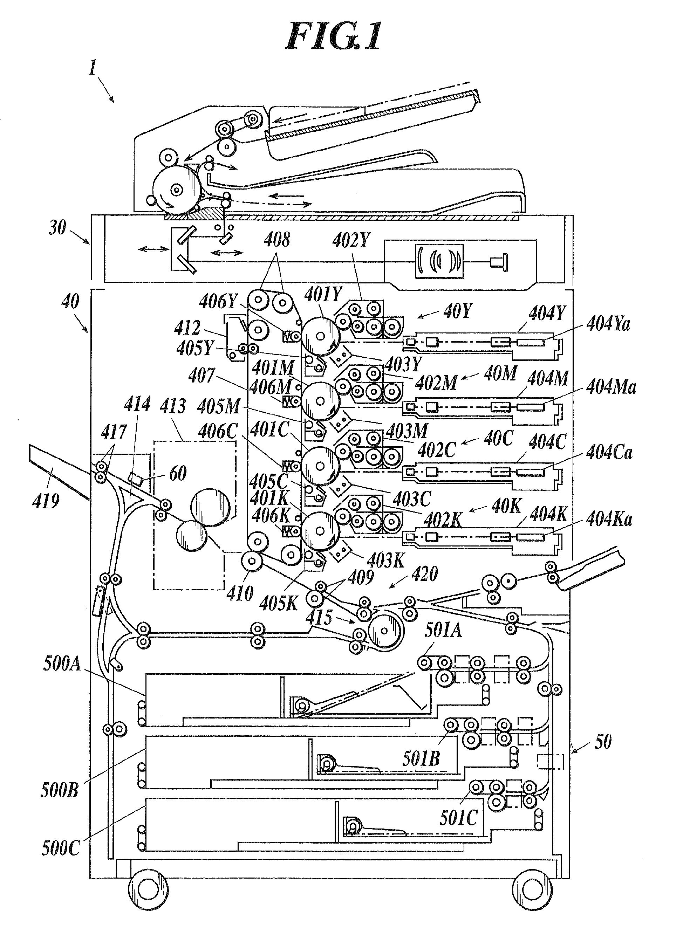

An image forming apparatus 1 includes an image reading section 30, an image forming section 40, a sheet feeding section 50, and an image density measurement section 60 as shown in FIG. 1, for example.

The image reading section 30 includes an auto document feeder (ADF), a platen glass, a charge coupled device (CCD), and a light source. Light is emitted from the light source so as to irradiate a document which is supplied by the ADF or set at a prescribed position, and thereby the document is scanned. The CCD performs photoelectric conversion of reflected light of the light. Consequently, the image reading section 30 reads an image on the document as red (R), green (G), and blue (B) analog image signals, converts the read analog image signals into image data of R, G, and B, and outputs the image data.

The outputted image data is sent to the image forming section 40 after prescribed image processing is performed on the image data so that the image data is converted into cyan, magenta, yellow, and black (CMYK) data. In the embodiment, the image forming section 40 outputs a test pattern for gradation correction in a correction mode which is described below.

The image forming section 40 includes image forming units 40Y, 40M, 40C, and 40K, a no-end immediate transfer belt 407, a carrying section 420 which carries a sheet of paper which is fed, and a fixing section 413 which fixes a toner image transferred onto the sheet.

The image forming unit 40Y which forms an yellow (Y) image includes a photosensitive drum 401Y as an image holder, a developing device 402Y, an electrifier 403Y which is deposited in the vicinity of the photosensitive drum 401Y, a laser section 404Y, a cleaner 405Y, and a first transfer roller 406Y.

Similarly, the image forming unit 40M which forms a magenta (M) image includes a photosensitive drum 401M, a developing device 402M, an electrifier 403M, a laser section 404M, a cleaner 405M, and a first transfer roller 406M.

Similarly, the image forming unit 40C which forms a cyan (C) image includes a photosensitive drum 401C, a developing device 402C, an electrifier 403C, a laser section 404C, a cleaner 405C, and a first transfer roller 406C.

Similarly, the image forming unit 40K which forms a black (K) image includes a photosensitive drum 401K, a developing device 402K, an electrifier 403K, a laser section 404K, a cleaner 405K, and a first transfer roller 406K.

Here, an image forming operation at the image forming section 40 is described. First, in the image forming unit 40Y, the photosensitive drum 401Y is rotated, the surface of the photosensitive drum 401Y is electrified by the electrifier 403Y, and a latent image of Y image data is formed on the electrified area on the photosensitive drum 401Y by laser light outputted from the laser section 404Y, the laser light to which the electrified area is exposed. Then, the latent image is developed by the developing device 402Y, so that a Y toner image is formed. The Y toner image is transferred (first transfer) onto the intermediate transfer belt 407 by the first transfer roller 406Y and the photosensitive drum 401Y being contacted with each other by pressure. The Y toner image becomes a Y image corresponding to image data which is to be outputted. The toner which is not transferred is removed by the cleaner 405Y.

Similarly, an M toner image, a C toner image, and a K toner image are formed and transferred in the image forming units 40M, 40C, and 40K, respectively. The image forming section 40 further includes rollers 408, and a second transfer roller 410. The intermediate transfer belt 407 is rotated by the rotation of the rollers 408, the second transfer roller 410, and the first transfer rollers 406Y, 406M, 406C, and 406K. The CMYK toner images are sequently transferred onto the intermediate transfer belt 407 so as to be sequently superposed thereon by the rotation of the intermediate transfer belt 407.

The sheet feeding section 50 includes sheet feeding trays 500A, 500B, and 500C, and sheet feeding rollers 501A, 501B, and 501C for respectively carrying sheets set in the sheet feeding trays 500A, 500B, and 500C to the carrying section 420.

When images are formed on sheets by the image forming section 40, sheets are carried one by one to the carrying section 420 from any one of the sheet feeding trays 500A, 500B, and 500C by the rotation of the respective sheet feeding rollers 501A, 501B, and 501C. Then, each sheet is carried to the second transfer roller 410 by the rotation of registration rollers 409 in the carrying section 420.

When the sheet passes through a nip part of the second transfer roller 410, the CMYK toner images on the intermediate transfer belt 407 are transferred onto the sheet (second transfer). The sheet onto which the CMYK toner images are transferred passes through the fixing section 413. The CMYK toner images are fixed on the sheet by pressurization and heating at the fixing section 413, so that a color image is formed on the sheet. The sheet on which the image is formed is ejected by sheet ejection rollers 417.

When images are formed on both sides of a sheet, a sheet of which an image is formed on one side (front side) is carried into a sheet-reverse unit 415 by a carrying path changing board 414. The sheet is reversed by the sheet-reverse unit 415. Then, the sheet is carried to the second transfer roller 410 by the registration rollers 409 such that an image is formed on the other side (back side) on which an image is not formed yet. The sheet of which images are formed on both sides is ejected to a sheet ejection tray 419 by the sheet ejection rollers 417. In the embodiment, a flow path which a sheet takes by being carried by the registration rollers 409, the second transfer roller 410, the sheet-reverse unit 415, the sheet ejection rollers 417, and the like is referred to as the carrying section 420.

After an image is formed on a sheet, the toner which is left on the intermediate transfer belt 407 is removed by a belt cleaner 412. In addition, a positive current and a negative current alternatively flow from a power source (not shown) to the second transfer roller 410 for a prescribed period of time, and thereby, the toner which is left on the second transfer roller 410 is transferred back onto the intermediate transfer belt 407, and the second transfer roller 410 is cleaned accordingly.

In the embodiment, when a sheet which passes through the fixing section 413 is sent toward the sheet ejection rollers 417 by the carrying path changing board 414 in the correction mode, the density of a test pattern formed on the sheet is measured by the image density measurement section 60 which is deposited above the carrying section 420.

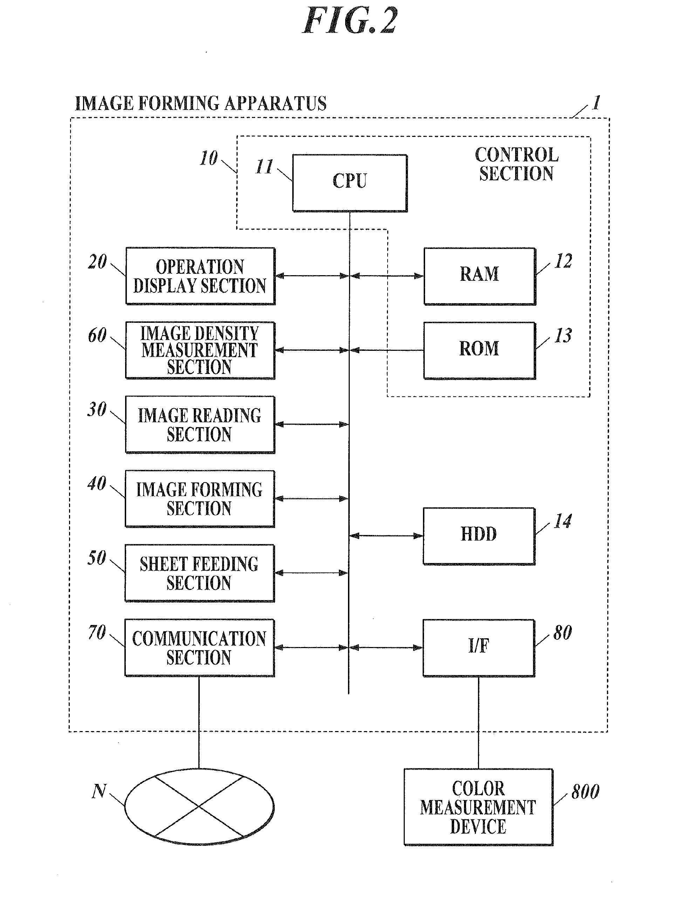

Next, a control system of the image forming apparatus 1 is described. The image forming apparatus 1 includes a control section 10, a hard disk drive (HDD) 14, an operation display section 20, a communication section 70, and an interface (I/F) 80, in addition to the image reading section 30, the image forming section 40, the sheet feeding section 50, and the image density measurement section 60 as shown in FIG. 2.

The control section 10 includes a central processing unit (CPU) 11, a random access memory (RAM) 12, and a read only memory (ROM) 13. In the ROM 13, various processing programs are stored. The CPU 11 reads each of the various processing programs from the ROM 13, expands the read program in the RAM 12, and controls operations of the sections and the like of the image forming apparatus 1 according to the expanded program.

For example, when image data is inputted from the image reading section 30 or the communication section 70, the control section 10 performs various image processing on the inputted image data, and outputs the image data to the image forming section 40 page by page so as to allow the image forming section 40 to form images. The various image processing includes, for example, processing for converting RGB image data inputted from the image reading section 30 into CMYK image data, and processing for converting image data inputted from a host device (not shown) via the communication section 70 into CMYK image data by using a prescribed page description language so that the image forming apparatus 1 is capable of forming images from the image data.

The HDD 14 stores various data according to instructions from the control section 10. For example, the HDD 14 stores image data of a test pattern which is outputted in the correction mode, a table in which the gradation correction amount is stored, and the like.

The operation display section 20 includes a liquid crystal display (LCD) , a touch panel, and a numeric keypad. The operation display section 20 performs displaying on the LCD by receiving display signals sent from the control section 10, and outputs operation signals inputted from the touch panel and the numeric keypad to the control section 10.

The communication section 70 is an interface which is capable of connecting to a transmission medium connected to a communication network N such as a local area network (LAN) and a wide area network (WAN). The communication section 70 is composed of, for example, a communication control card such as a LAN card, and transmits and receives various data to/from an external device such as a host device connected to the communication network N via a communication line with a LAN cable.

The I/F 80 is, for example, an interface complying with the universal serial bus (USB) standard, and is connected to a peripheral device via a prescribed cable. In the embodiment, the I/F 80 is connected to a color measurement device 800 as an image density measurement device which measures the density of an image of a test pattern formed on a sheet.

Next, a control system of the image forming section 40 is described. Since the image forming units 40Y, 40M, 40C, and 40K of the image forming section 40 have the same structure, the structure of the image forming unit 40Y is described in the following and the explanation of the other image forming units is omitted.

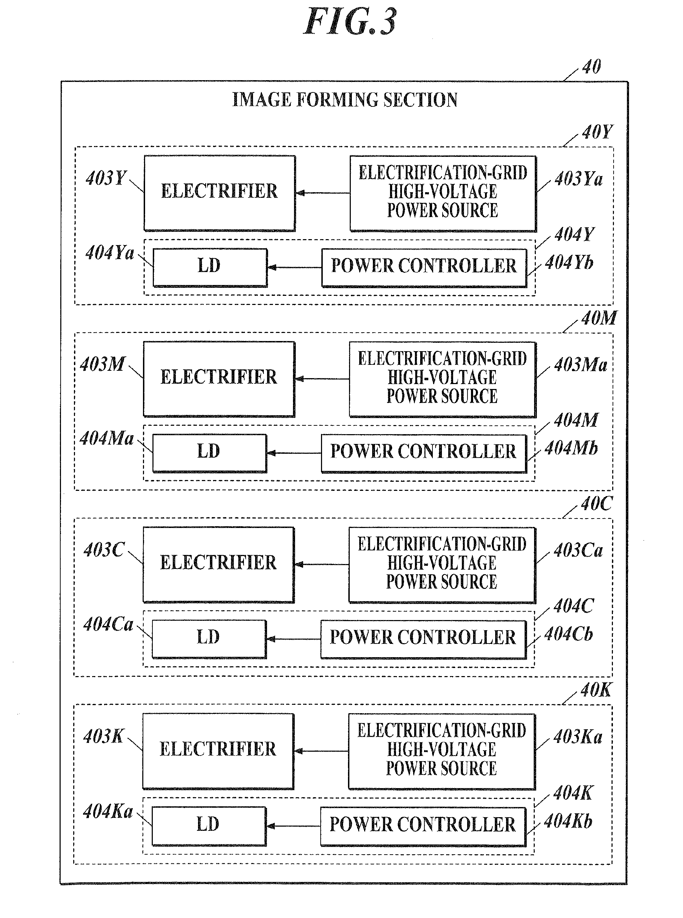

As shown in FIG. 3, the image forming unit 40Y includes an electrification-grid high-voltage power source 403Ya. The electrification-grid high-voltage power source 403Ya is connected to the electrifier 403Y.

The electrification-grid high-voltage power source 403Ya is a power source which supplies a bias voltage to the electrifier 403Y to electrify the photosensitive drum 401Y, and outputs a voltage value of the bias voltage according to a command from the control section 10.

The laser section 404Y includes a laser diode (LD) 404Ya as a light source and a power controller 404Yb. The energy of the LD 404Ya is adjusted by the power controller 404Yb.

Another light source such as a light-emitting diode (LED) can be used instead of the LD 404Ya.

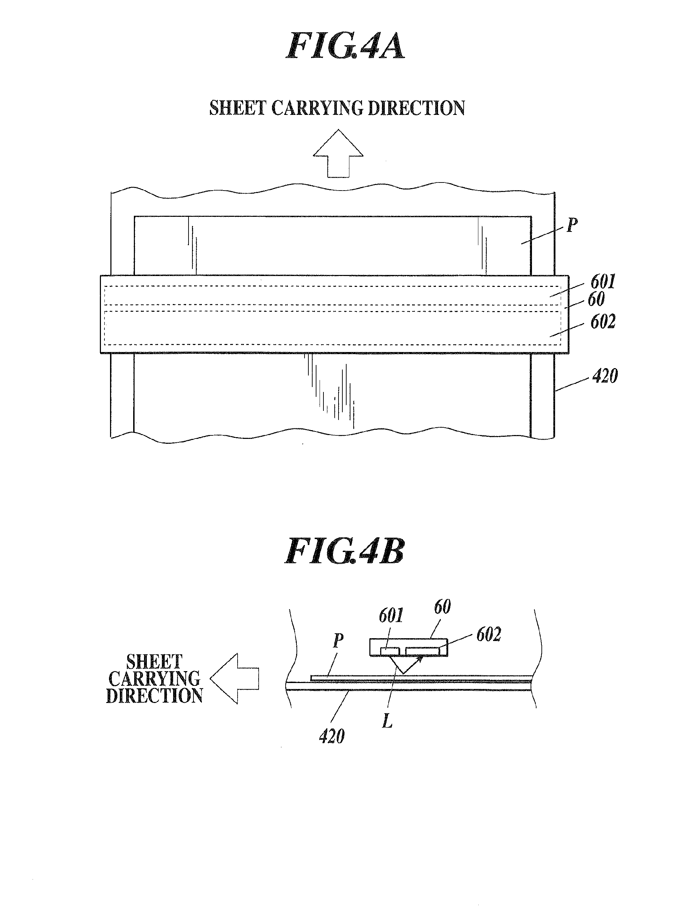

Next, an image density measurement method of a test pattern used by the image density measurement section 60 is described. FIG. 4A is an enlarged plane view of the image density measurement section 60 deposited above the carrying section 420, and FIG. 4B is a schematic lateral view thereof.

As shown in FIGs . 4A and 4B, the image density measurement section 60 includes a light source 601 and a CCD 602. As the light source 601, an LED, a cold cathode fluorescent lamp (CCFL) , or the like can be used. Light L outputted from the light source 601 is reflected by a test pattern formed on a sheet of paper P, and inputted into the CCD 602. That is, the CCD 602 performs scanning by inputting the light L which is reflected by the test pattern, thereinto.

The CCD 602 is wider than a sheet of the paper P, which is carried on the carrying section 420, in the width direction of the paper P. Consequently, the CCD 602 can read the whole image formed on the paper P in the main-scanning direction at a time.

The light L inputted into the CCD 602 is photoelectrically converted, and image density signals are outputted to the control section 10 by the image density measurement section 60 as a result of the measurement. A test pattern on the paper P is, for example, formed in such a way that a plurality of belt-shaped patterns 1001 extending in the main-scanning direction is arranged in the sub-scanning direction as shown in FIGs . 6 and 7. The belt-shaped patterns 1001 having a same gradation are formed by the image forming section 40 in order to detect the density unevenness in the main-scanning direction. In the embodiment, A3 plain paper is used as the paper P which is used for image density measurement, but it is not a limit. Any paper suitable for the image density measurement can be used as the paper P.

When the belt-shaped patterns 1001 are scanned, the image density signals are outputted from the image density measurement section 60. The control section 10 corrects the density unevenness in the main-scanning direction (in other words, adjusts density balance) based on the outputted image density signals.

The CCD 602 sequently scans the belt-shaped patterns 1001 formed on the upper side of the paper P carried on the carrying section 420 in a sheet carrying direction.

In the embodiment, another light receiving element which can receive and photoelectrically convert the light reflected by the test pattern may be used instead of the CCD 602. In this case, a plurality of light receiving elements may be arranged in the main-scanning direction so as to be in line, or one or more light receiving elements may perform scanning in the main-scanning direction, and thereby sequently scan the belt-shaped patterns 1001.

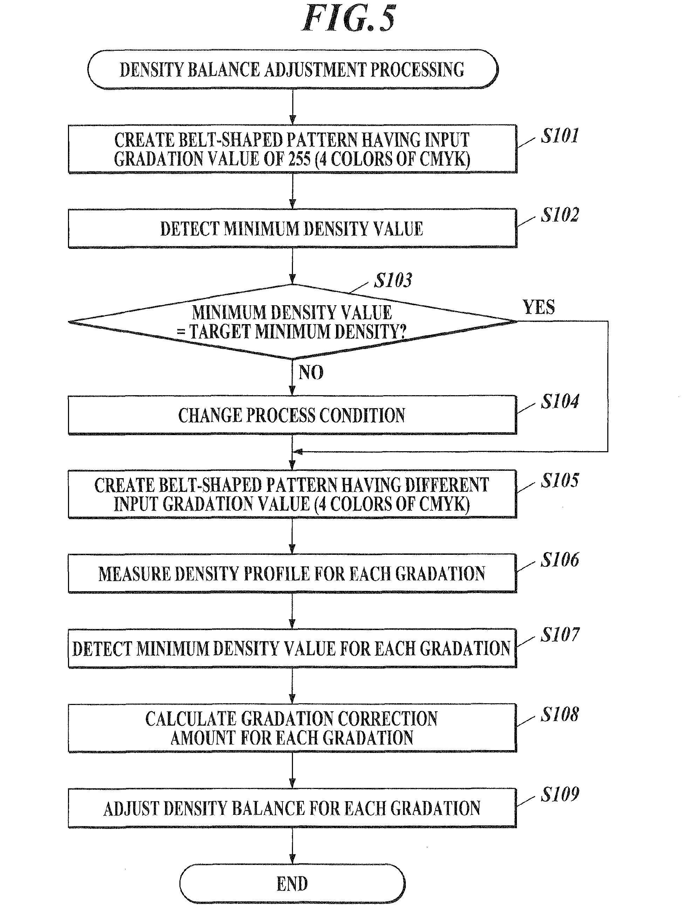

Next, steps of the density balance adjustment processing according to the embodiment of the present invention are described referring to FIG. 5.

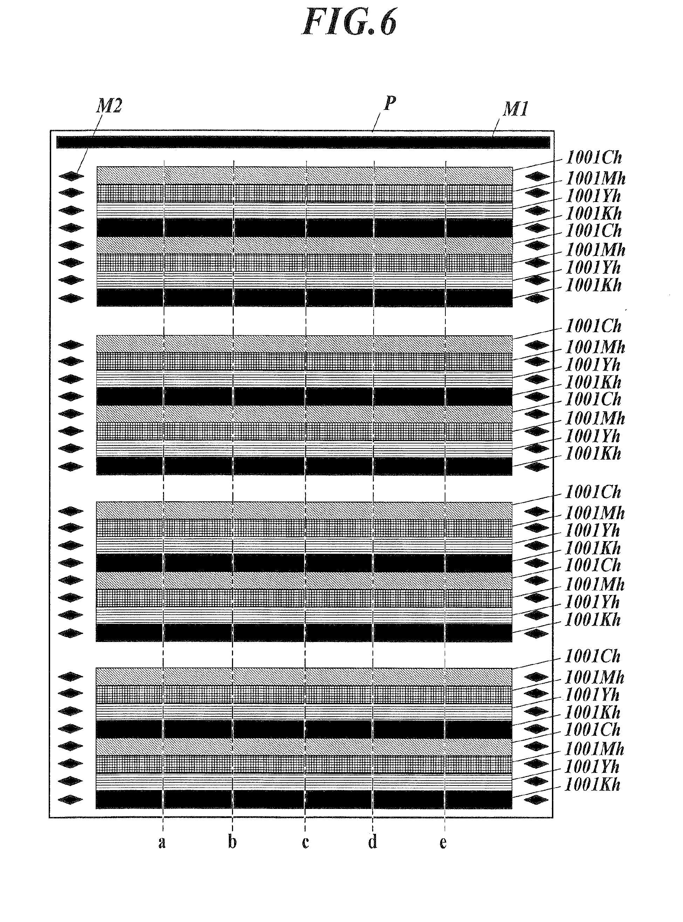

When the control section 10 detects that a prescribed operation is performed at the operation display section 20, and shifts a mode to the correction mode, the control section 10 allows the image forming section 40 to form belt-shaped patterns for each of CMYK, the belt-shaped patterns each of which has an input gradation value of 255 (maximum gradation test pattern) (Step S101) . That is, the control section 10 controls the image forming section 40 in such a way that a cyan belt-shaped pattern having the maximum gradation (C input gradation value 255 belt-shaped pattern) 1001Ch, a magenta belt-shaped pattern having the maximum gradation (M input gradation value 255 belt-shaped pattern) 1001Mh, a yellow belt-shaped pattern having the maximum gradation (Y input gradation value 255 belt-shaped pattern) 1001Yh, and a black belt-shaped pattern having the maximum gradation (K input gradation value 255 belt-shaped pattern) 1001Kh are repeatedly formed in order on a sheet of the paper P in the sub-scanning direction as shown in FIG. 6. It is preferable that the length of each of the belt-shaped patterns 1001 be long enough to cover the width of the sheet of the paper P in the main-scanning direction, the width within which images can be formed. For example, when an image forming apparatus is capable of forming images on a sheet of A3 paper, it is preferable that belt-shaped patterns each of which has the length of about 300 mm be formed on the sheet of the A3 paper.

A start-pattern M1 shown in FIG. 6 indicates the top end of a test pattern in which a plurality of belt-shaped patterns 1001 is formed. By reading the start-pattern M1 by the image density measurement section 60 or other image density measurement devices, the starting position of formation of the belt-shaped patterns 1001 in the sub-scanning direction can be easily identified.

POS markers M2 shown in FIG. 6 are patterns each of which acts as identification information which identifies the starting position of measurement of the density (measurement starting position) of each of the belt-shaped patterns 1001 in the main-scanning direction. By reading the POS markers M2 by the image density measurement section 60 or other image density measurement devices, the measurement starting positions of the belt-shaped patterns 1001 in the main-scanning direction can be easily identified.

In the embodiment of the present invention, although being predetermined in order to facilitate the accurate image density measurement, the shapes, the positions, and the like of the start-pattern M1 and the POS markers M2 may be optionally set. Also, the numbers of start-patterns M1 and POS markers M2 to be arranged may be optionally set. Furthermore, it is not a requirement to provide the start-pattern M1 and the POS markers M2.

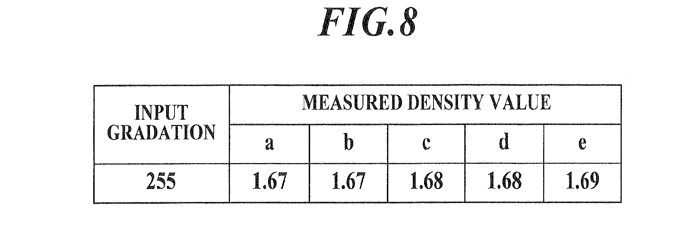

Next, the control section 10 allows the image density measurement section 60 to scan the test pattern (maximum gradation test pattern) formed at Step S101, and detects, for each color, a minimum density value based on image density signals outputted from the image density measurement section 60, the minimum density value which indicates the minimum density (Step 5102). That is to say, as described above, the control section 10 allows the image density measurement section 60 to scan the belt-shaped patterns 1001 each of which has the input gradation value of 255, and calculates a measured density value at each of measurement positions a to e, shown in FIG. 6, from the image density signals outputted from the image density measurement section 60, with regard to each of the belt-shaped patterns 1001. Then, the control section 10 calculates the average of the measured density values at each of the measurement positions a to e for each color. As a result, the measured density values shown in FIG. 8 are obtained. The measured density values shown in FIG. 8 are for black. Similarly, the measured density values for the other colors are obtained. Thus, the density unevenness in the sub-scanning direction can be further reduced by calculating the average of the measured density values at each of the measurement positions for each color. It is not necessary that the belt-shaped patterns 1001Ch, 1001Mh, 1001Yh, and 1001Kh, each of which has the input gradation value of 255, are repeatedly formed on a sheet, and only one of each may be formed thereon. The control section 10 compares, for each color, the averages of the measured density values at the respective measurement positions a, b, c, d, and e, which are shown in FIG. 8, with each other so as to detect the minimum density value for each color. As shown in FIG. 8, as for black, the measured density values at the measurement positions a and b are 1.67 which is the minimum, so that 1.67 is detected as the minimum density value.

Next, the control section 10 judges whether the minimum density value detected at Step S102 is equal to a predetermined target minimum density (standard density) or not (Step S103) so as to obtain a difference (identify a second error) therebetween. The target minimum density is predetermined by taking, for example, characteristics of the image forming apparatus 1 into consideration. The target minimum density may be set changeably in order to allow a user to obtain an ideal density.

When the control section 10 judges that the minimum density value is equal to the target minimum density at Step S103 (Step 5103 : YES) , the control section 10 moves to Step S105 . When the control section 10 judges that the minimum density value is not equal to the target minimum density at Step S103 (Step S103: NO), the control section 10 moves to Step S104.

In the embodiment of the present invention, the target minimum density is preset to 1.68. Since the minimum value among the measured density values of the black belt-shaped patterns 1001Kh is 1.67, the control section judges that the minimum density value is not equal to the target minimum density at Step S103, and moves to Step S104.

The control section 10 changes a condition for an image-forming process (image-forming process condition) at the image forming section 40 so as to make the minimum density value be the target minimum density (Step S104). More specifically, in order to change the image-forming process condition for forming black images, for example, the control section 10 controls the image forming section 40 in such a way that a bias voltage of the electrification-grid high-voltage power source 403Ka of the image forming unit 40K is changed, and thereby a voltage on the photosensitive drum 401K is adjusted via the electrifier 403K. For example, the density can be increased by increasing the bias voltage of the electrification-grid high-voltage power source 403Ka so as to increase the voltage on the photosensitive drum 401K.

As another way for changing the image-forming process condition, for example, the control section 10 controls the image forming section 40 in such a way that the power controller 404Kb adjusts exposure energy of the LD 404Ka. As an exposure energy adjustment method, changing an output pulse width, changing an output voltage, and the like can be used. For example, the density can be increased by increasing the exposure energy of the LD 404Ka so as to make the voltage on an exposed area of the photosensitive drum 401K further lower.

The image-forming process condition may be changed by both changing the bias voltage of the electrification-grid high-voltage power source and adjusting the exposure energy of the LD. By taking any of the above-described ways, the density of an image outputted at the maximum gradation is compensated in the main-scanning direction.

In the embodiment, in order to increase the minimum density value from 1.67 to 1.68 which is the target minimum density, the control section 10 controls the image forming section 40, for example, to increase the bias voltage of the electrification-grid high-voltage power source 403Ka by 10 V.

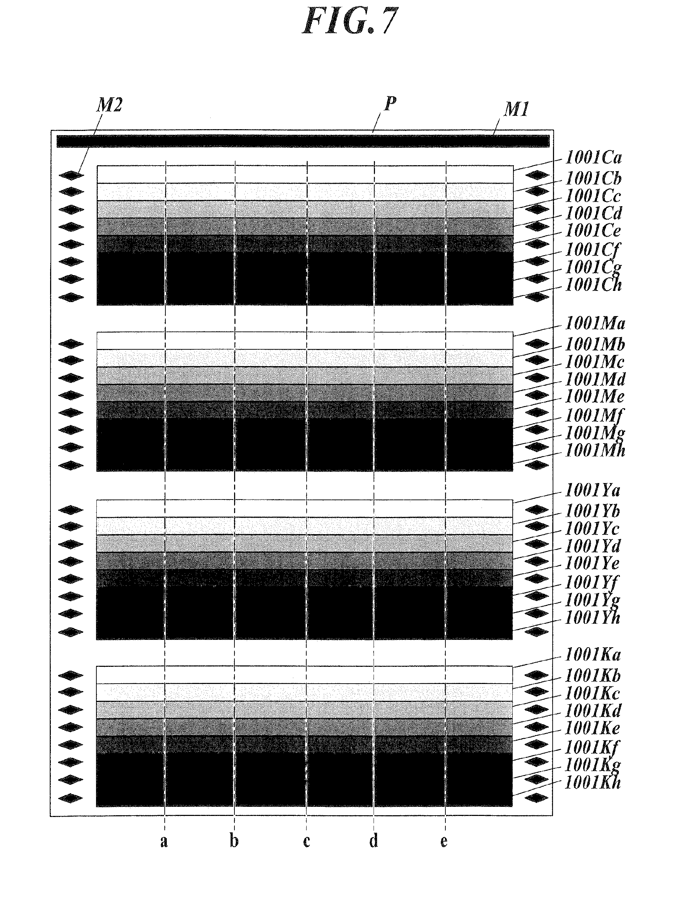

Next, the control section 10 controls the image forming section 40 to form a plurality of belt-shaped patterns for each of CMYK, the belt-shaped patterns which have input gradation values different from each other (different gradation test pattern) (Step S105). More specifically, the control section 10 controls the image forming section 40 to form a cyan belt-shaped pattern having the input gradation value of 32 (C input gradation value 32 belt-shaped pattern) 1001Ca, a cyan belt-shaped pattern having the input gradation value of 64 (C input gradation value 64 belt-shaped pattern) 1001Cb, a cyan belt-shaped pattern having the input gradation value of 96 (C input gradation value 96 belt-shaped pattern) 1001Cc, a cyan belt-shaped pattern having the input gradation value of 128 (C input gradation value 128 belt-shaped pattern) 1001Cd, a cyan belt-shaped pattern having the input gradation value of 160 (C input gradation value 160 belt-shaped pattern) 1001Ce, a cyan belt-shaped pattern having the input gradation value of 192 (C input gradation value 192 belt-shaped pattern) 1001Cf, a cyan belt-shaped pattern having the input gradation value of 224 (C input gradation value 224 belt-shaped pattern) 1001Cg, and the cyan belt-shaped pattern having the input gradation value of 255 (C input gradation value 255 belt-shaped pattern) 1001Ch in such a way that the cyan belt-shaped patterns 1001Ca to 1001Ch are sequently arranged in the sub-scanning direction as shown in FIG. 7. Similarly, the control section 10 controls the image forming section 40 to form magenta belt-shaped patterns 1001Ma to 1001Mh, yellow belt-shaped patterns 1001Ya to 1001Yh, and black belt-shaped patterns 1001Ka to 1001Kh following the cyan belt-shaped patterns 1001Ca to 1001Ch on the sheet.

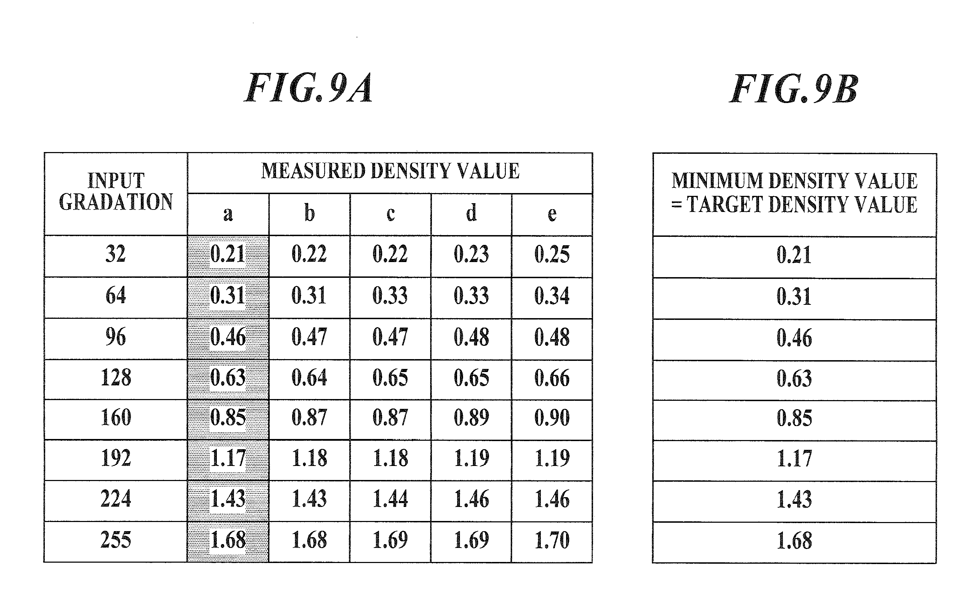

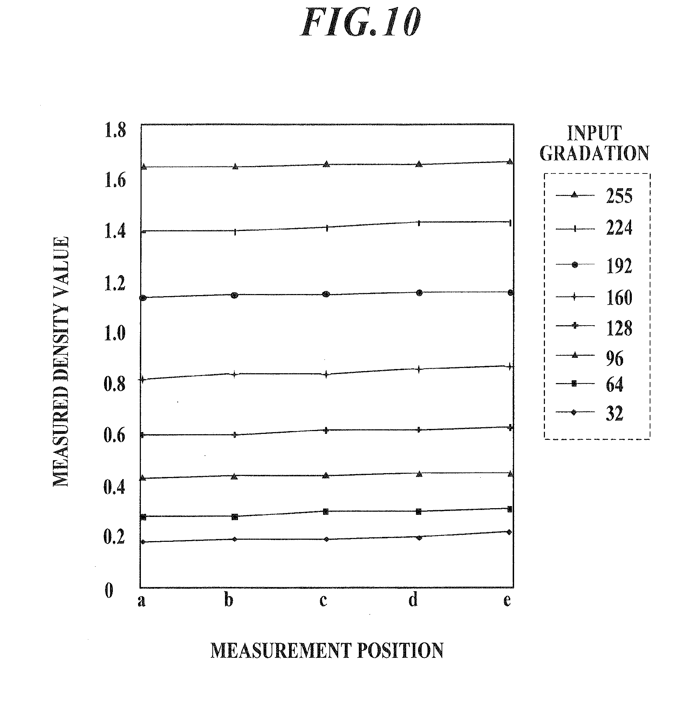

Next, the control section 10 allows the image density measurement section 60 to scan the test pattern (different gradation test pattern) formed at Step S105, and, for each gradation, measures a density profile of the belt-shaped pattern 1001 based on the image density signals outputted from the image density measurement section 60 (Step S106). More specifically, as described above, the control section 10 allows the image density measurement section 60 to scan the belt-shaped patterns 1001 which have the input gradation values different from each other, and calculates the measured density value at each of the measurement positions a to e, shown in FIG. 7, from the image density signals outputted from the image density measurement section 60 for each gradation and color. As a result, with regard to the black belt-shaped patterns 1001Ka to 1001Kh, the measured density values shown in FIG. 9A are obtained. The obtained measured density values are shown by the graph of FIG. 10. In FIG. 10, the vertical axis indicates the measured density values, and the horizontal axis indicates the measurement positions a to e. As it is obvious by the result of the measurement shown in FIG. 10, each of the black belt-shaped patterns 1001Ka to 1001Kh has a so-called density gradient. That is, as a measurement position is to the right on a sheet compared to another measurement position, the measured density value at the measurement position is larger than the measured density value at the another measurement position. This result is obtained when, for example, a rotation shaft of a developing roller of a developing device and a rotation shaft of a photosensitive drum are not completely in parallel, thereby, distance deviation between the developing roller and the photosensitive drum is produced, and as a result, difference of an amount of developer to be carried is produced. Another factor which may produce the density unevenness is that an electrification grid of an electrifier is contaminated by toner or ozone, and consequently, the voltage on the photosensitive drum becomes different from position to position on the photosensitive drum.

The measured density values shown in FIG. 9A are for black. The measured density values for the other colors are obtained similarly.

Next, the control section 10 detects the minimum density value for each color and gradation, the minimum density value which indicates the minimum density, from among the measured density values obtained at Step S106 (Step S107). More specifically, the control section 10 compares the measured density values at the measurement positions a to e shown in FIG. 9A with each other for each color and gradation so as to detect the minimum density value therefor. The minimum density values of the black belt-shaped patterns 1001 for each gradation are indicated by shading in FIG. 9A. The minimum density values of the black belt-shaped pattern having the input gradation value of 32 (K input gradation value 32 belt-shaped pattern) 1001Ka, a black belt-shaped pattern having the input gradation value of 64 (K input gradation value 64 belt-shaped pattern) 1001Kb, a black belt-shaped pattern having the input gradation value of 96 (K input gradation value 96 belt-shaped pattern) 1001Kc, a black belt-shaped pattern having the input gradation value of 128 (K input gradation value 128 belt-shaped pattern) 1001Kd, a black belt-shaped pattern having the input gradation value of 160 (K input gradation value 160 belt-shaped pattern) 1001Ke, a black belt-shaped pattern having the input gradation value of 192 (K input gradation value 192 belt-shaped pattern) 1001Kf, a black belt-shaped pattern having the input gradation value of 224 (K input gradation value 224 belt-shaped pattern) 1001Kg, and the black belt-shaped pattern having the input gradation value of 255 (K input gradation value 255 belt-shaped pattern) 1001Kh are 0.21 at the position a, 0.31 at the position a, 0.46 at the position a, 0.63 at the position a, 0.85 at the position a, 1.17 at the position a, 1.43 at the position a, and 1.68 at the position a, respectively. As shown in FIG. 9B, the obtained minimum density values for each gradation are used as the target density values for each gradation at Step S108 described below.

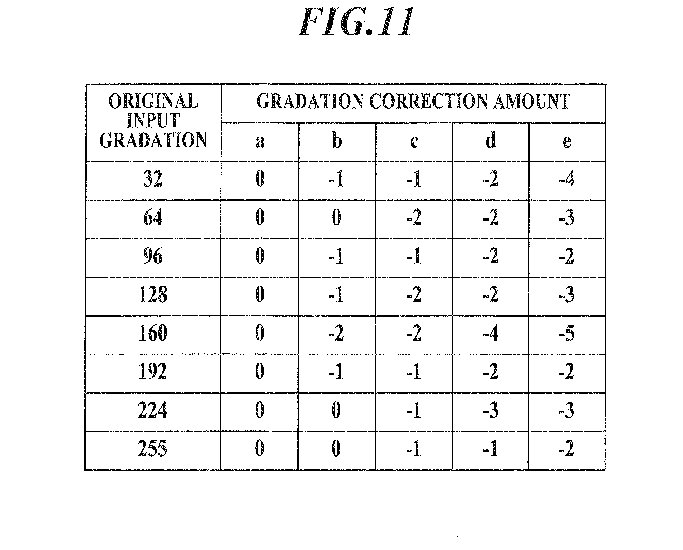

Next, the control section 10 obtains, for each gradation and color, a difference (first error) between each of the measured density values shown in FIG. 9A and its minimum density values detected at Step S107, the minimum density value which is the target density value, and calculates a gradation correction value based on the difference (Step S108). More specifically, the control section 10 obtains a difference (first error) between the target density value and each of the measured density values which respectively correspond to the measurement positions a to e. Then, the control section 10 creates a table by which an original input gradation is changed by 1 when the difference is 0.01. For example, when the difference between the measured density value and the target density value (a measured density value minus a target density value) is +0.03, the amount of correction of a gradation (gradation correction amount) is set to -3, and the gradation correction amount is stored in the table. In this manner, the control section 10 creates the table shown in FIG. 11, the table in which the gradation correction amounts are set, based on the measured density values obtained from the density measurement result of the black belt-shaped patterns 1001Ka to 1001Kh, and the table is stored in the RAM 12, the HDD 14, or the like. Similarly, the control section 10 creates tables on which the gradation correction amounts are set for the other colors.

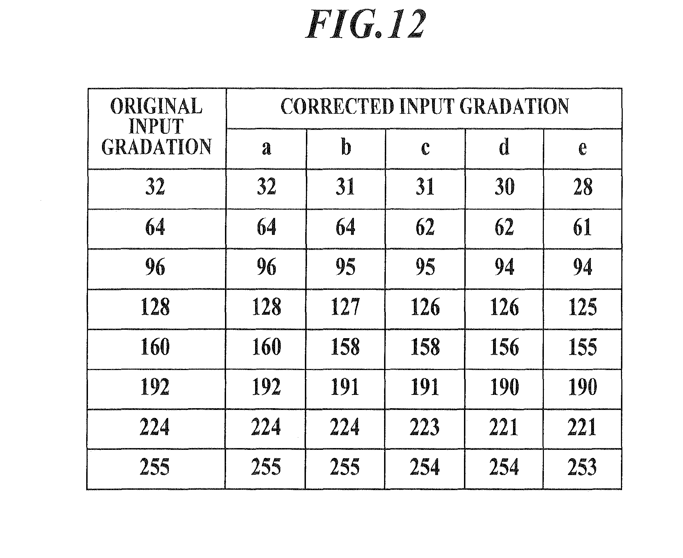

When image data is inputted from the image reading section 30, a host device, or the like, the control section 10 refers to the table created at Step S108, and adjusts the density balance for each gradation (Step S109) . More specifically, with regard to the inputted image data, the control section 10 refers to the table, and reads, therefrom, a gradation correction amount corresponding to the input gradation (original input gradation) for each position where an image is outputted. Next, the control section 10 calculates a corrected input gradation from the read gradation correction value so as to correct the gradation. Then, the control section 10 adjusts the density balance by performing control under which an image is formed on a sheet by using the corrected input gradation. For example, when a black image is formed, the image is formed by using the corrected input gradations shown in FIG. 12. When the original input gradation is 255, and the corrected input gradation is less than 255, the control section 10 adjusts the gradation by half-toning suitable to the corrected input gradation.

In the embodiment of the present invention, the density of an image is measured at five positions, namely, the measurement positions a, b, c, d, and e, and the density balance of the image is adjusted based thereon. However, the measurement positions can be optionally set. By increasing the number of measurement positions in the main-scanning direction, the number of positions to correct a gradation is increased, and hence, finer adjustment becomes available, accordingly, the accuracy of the gradation correction can be improved.

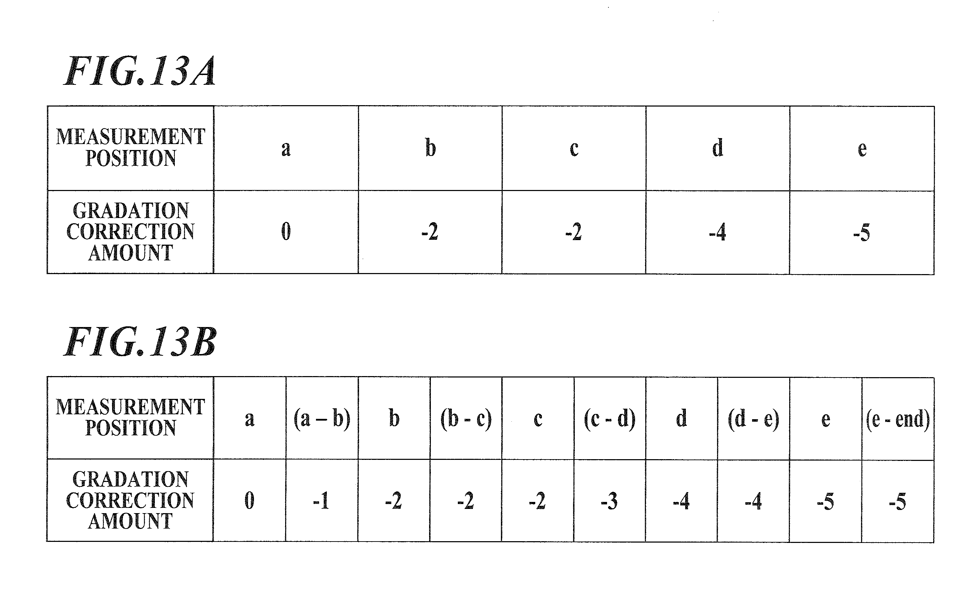

When the density balance is adjusted between the measurement positions, for example, a gradation correction amount at between the measurement positions may be obtained by interpolation processing based on the gradation correction amounts obtained as described above. For the interpolation processing, for example, linear interpolation can be used. By the linear interpolation, the gradation correction amounts at between the measurement positions shown in FIG. 13B can be obtained based on the gradation correction amounts at the measurement positions shown in FIG. 13A. Not only the linear interpolation but also polynomial interpolation, spline interpolation, and the like can be used for the interpolation processing.

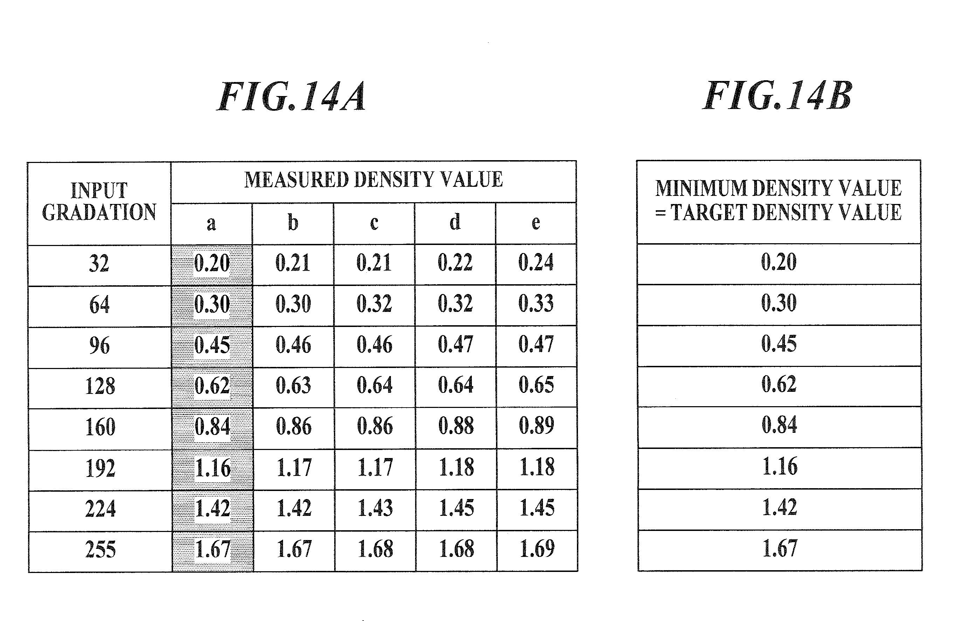

In the embodiment, Steps S102 to S104 are taken in the density balance adjustment processing, and when the detected minimum density value is not equal to the target minimum density, the image-forming process condition is changed. However, it is possible that Steps S102 to S104 are omitted, and the image-forming process condition is not changed. In this case, for example, with regard to the black belt-shaped patterns, the measured density values for each gradation at each position shown in FIG. 14A are obtained at Step S106. However, as the image-forming process condition is not changed in the case, the measured density values shown in FIG. 14A are 0.01 lower than the measured density values shown in FIG. 9A, respectively. Consequently, the minimum density values for the respective gradations shown in FIG. 14B are also 0. 01 lower than the minimum density values for the respective gradations shown in FIG. 9B. The differences between the minimum density values as the target density values and the measured density values are the same as the differences (first errors) obtained when the image-forming process condition is changed. Consequently, the gradation correction amounts calculated at Step S108 are the same as the gradation correction amounts shown in FIG. 11. Accordingly, the corrected input gradations are the same as the corrected input gradations shown in FIG. 12.

In the embodiment, after the maximum gradation test pattern is outputted and the image-forming process condition is changed, the different gradation test pattern is outputted, and then, the density balance is adjusted. However, it is possible that after only one of the test patterns is outputted, the image-forming process condition is changed, and also the density balance is adjusted. That is, for example, when the density balance is adjusted by using only the belt-shaped patterns having the maximum gradation, measured density values for the other gradations can be obtained from the measured density values of the belt-shaped patterns having the maximum gradation (255) by multiplying each of the measured density values thereof by a prescribed coefficient, and gradation correction values for the other gradations can be calculated based thereon. It is also possible that the gradation correction values for the maximum gradation are calculated from the measured density values of the belt-shaped patterns having the maximum gradation (255), and the gradation correction values for the maximum gradation are used as the gradation correction values for the other gradations. For changing the image-forming process condition, the above-described ways can be used. On the other hand, when the image-forming process condition is changed by using only the different gradation test pattern, for example, among the belt-shaped patterns having gradations different from each other which are formed on a sheet, the minimum density value is obtained from the belt-shaped pattern having the maximum input gradation value (255), and the image-forming process condition can be changed based thereon. For the density balance adjustment, the above-described ways can be used.

In the embodiment, after the maximum gradation test pattern is outputted, and the image-forming process condition is changed by measuring the belt-shaped patterns in the maximum gradation test pattern, the different gradation test pattern is outputted, and then the density balance is adjusted by measuring the belt-shaped patterns in the different gradation test pattern. However, it is possible that, first, either one of the test patterns is outputted so as to measure the belt-shaped patterns therein, and then the change of the image-forming process and the adjustment of the density balance are performed at the same time based on the result of the measurement. That is, since it can be anticipated that the amount of changes of the measured density values are uniform between before and after the change of the image-forming process, the change of the image-forming process and the adjustment of the density balance can be performed at the same time by outputting only one test pattern. Consequently, the density balance adjustment can be simple and easy, and resources such as sheets of paper and developer can be saved. On the other hand, when a test pattern is outputted before and after the change of the image-forming process, the change of the image-forming process and the adjustment of the density balance can be performed based on the measured density values which are actually measured. Consequently, the accuracy of the density balance adjustment can be increased.

In the embodiment, the number of gradations to be measured is eight. However, the number thereof can be seven or less, or nine or more. The larger the number of gradations to be measured is, the more accurate the correction becomes.

In the embodiment, the maximum gradation test pattern is formed on one sheet, and the different gradation test pattern is formed on one sheet, and the change of the image-forming process and the adjustment of the density balance are performed based thereon. However, each of the test patterns may be formed on a plurality of sheets so as to measure the belt-shaped patterns therein, and the change of the image-forming process and the adjustment of the density balance may be performed based thereon, namely, performed by measuring the belt-shaped patterns in the both test patterns each of which is formed on the plurality of sheets, and by obtaining the averages from the results of the measurements. Consequently, the density unevenness of the belt-shaped patterns, the density unevenness which is produced each time a test pattern is outputted, can converge, and hence, the accuracy of the correction can be further improved.

In the embodiment, the image density measurement section 60 measures the density of an image. However, the image reading section 30 may measure the density thereof. Furthermore, it is possible to measure the density of an image of a belt-shaped pattern formed on a sheet by using a well-known colorimeter, input the result of the measurement from the operation display section 20 of the image forming apparatus 1, and based thereon, to change the image-forming process and adjust the density balance. It is also possible that a colorimeter is connected to the communication section 70 or the I/F 80 so that the image forming apparatus 1 directly receives the image density measurement result from the colorimeter.

In the embodiment, the image density measurement section 60 is provided in the image forming apparatus 1. However, it is possible that the image forming apparatus 1 is provided with an optional device having an image density measurement section by being connected with each other, and the optional device measures the density of belt-shaped patterns formed on a sheet by receiving the sheet which is ejected from the image forming apparatus 1.

In the embodiment, the image density signals are generated based on the amount of light received by the light-receiving element of the CCD 602 of the image density measurement section 60. However, it is possible that the image density signals are generated as follows: by using a spectroscope such as a diffraction grating, light is dispersed, the light which is reflected by the belt-shaped patterns; the amount of the light is measured wavelength by wavelength; the density of an image is obtained based thereon; and the obtained density is transmitted to the control section 10 as the image density signals. Thereby, a gradation can be more accurately corrected.

Furthermore, the input gradation values of the belt-shaped patterns subjective to the image density measurement may be different from the input gradation values used in the embodiment. However, it is preferable to use input gradation values which are at least appropriate for adjusting the density balance when an input gradation value is the maximum input gradation value among the input gradation values.

### [Second Embodiment]

A second embodiment of the present invention is described referring to the drawings.

The structure of the image forming apparatus 1 according to the second embodiment is the same as the structure of the image forming apparatus 1 according to the first embodiment shown in FIG. 1 to FIG. 3. Therefore, the same reference numerals are used for the sections and the like shared between the first and the second embodiments, and the explanation thereof is omitted.

In the second embodiment, the image density is not measured by the image density measurement section 60 but by a color measurement device 800 connected to the I/F 80. The control section 10 adjusts the density balance based on the measurement result.

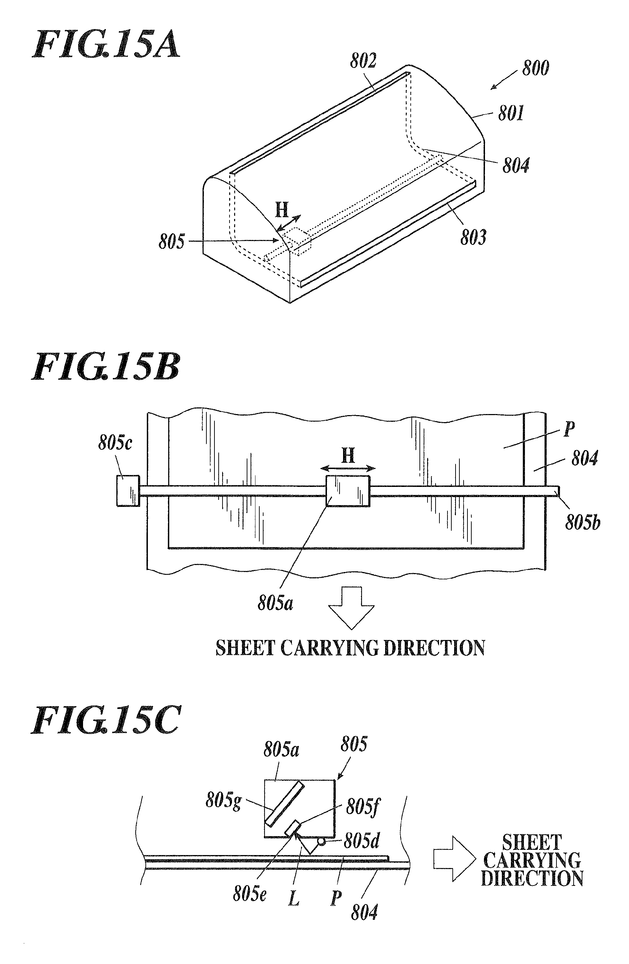

First, the external appearance of the color measurement device 800 is described referring to FIG. 15A.

As shown in FIG. 15A, the color measurement device 800 includes a color-measurement-device main body 801. A sheet insertion opening 802 is deposited at the rear part on the upper surface of the color-measurement-device main body 801, and a sheet ejection opening 803 is deposited at the lower part on the front surface thereof. In addition, a sheet carrying path 804 is deposited inside the color-measurement-device main body 801, the sheet carrying path which connects the sheet insertion opening 802 to the sheet ejection opening 803 so that sheets of paper are carried. Moreover, an image density measurement section 805 is deposited above the sheet carrying path 804 and near the sheet ejection opening 803.

Next, referring to FIG. 15B, the structure of the image density measurement section 805 is described. FIG. 15B is an enlarged plane view of the image density measurement section 805.

As shown in FIG. 15B, the image density measurement section 805 includes a measurement main body 805a, a guide shaft 805b which guides the measurement main body 805a to move in a horizontal direction H, and a driving motor 805c which moves the measurement main body 805a along the guide shaft 805b.

Next, referring to FIG. 15C, the measurement main body 805a is described. FIG. 15C is a schematic lateral view of the measurement main body 805a.

The measurement main body 805a includes an LED 805d deposited at the front part on the bottom surface thereof, and is provided with an aperture 805e at the center of the bottom surface thereof, the aperture 805e into which light L outputted from the LED 805d and reflected by a sheet of paper P enters. In addition, the measurement main body 805a includes a spectroscope 805f which disperses the light L inputted through the aperture 805e, and a light receiving section 805g which measures the amount of the dispersed light L wavelength by wavelength.

Instead of the LED 805d, another light source may be used.

Furthermore, instead of dispersing the light L, an image formed on a sheet may be scanned in the main-scanning direction at a time by using a light receiving element such as a CCD.

In the color measurement device 800, when a sheet of the paper P on which a test pattern is formed is inserted into the sheet insertion opening 802, the sheet is carried by the sheet carry path 804. When the sheet carried by the sheet carry path 804 comes under the image density measurement section 805, the image density measurement section 805 starts measurement of the density of the test pattern.

The image density measurement section 805 measures the density of the test pattern formed on the sheet in the main-scanning direction at prescribed measurement-distance intervals while reciprocating in the horizontal direction H. The measurement-distance of the image density measurement section 805 is set to be longer than the diameter of the aperture 805e. In the second embodiment, the measurement-distance is set to α mm. Consequently, every time one image density measurement in the main-scanning direction is completed, the sheet carry path 804 carries the sheet for a prescribed distance.

When the image density measurement section 805 completes the image density measurement for a sheet or a plurality of sheets, the color measurement device 800 transmits image density information which is the result of the image density measurement to the image forming apparatus 1. When the image density information transmitted from the color measurement device 800 is received by the image forming apparatus 1, the control section 10 thereof adjusts the density balance as described in detail in the first embodiment.

Next, steps of the density balance adjustment processing according to the second embodiment of the present invention are described.

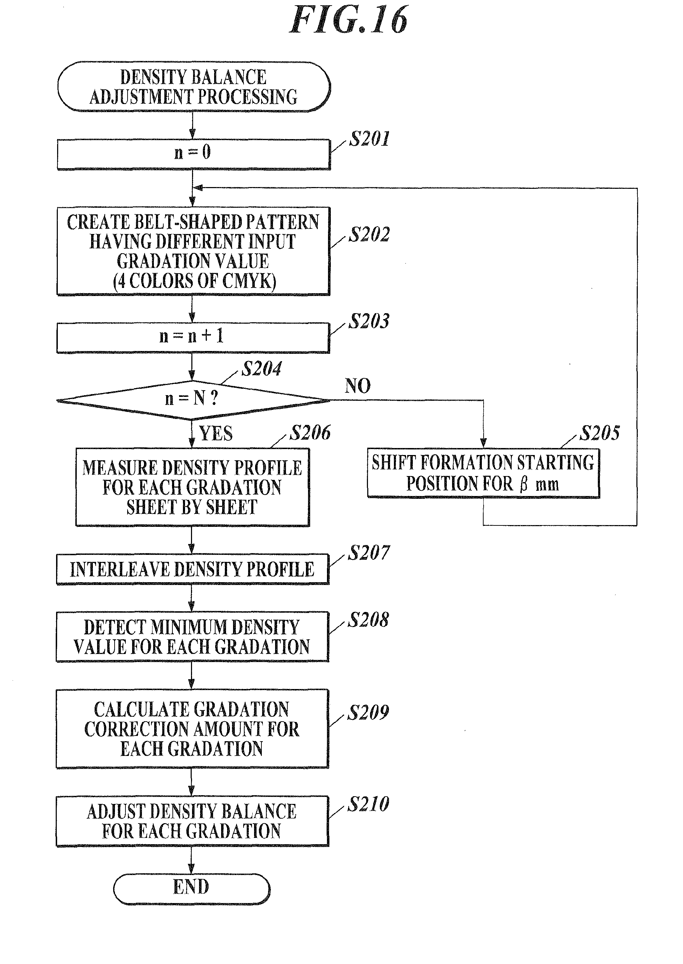

When the control section 10 detects that a prescribed operation is performed at the operation display section 20, and shifts a mode to the correction mode, as shown in FIG. 16, the control section 10 resets a value of a counter n which indicates the number of sheets on each of which a test pattern is outputted, namely, sets 0 to the n (Step S201).

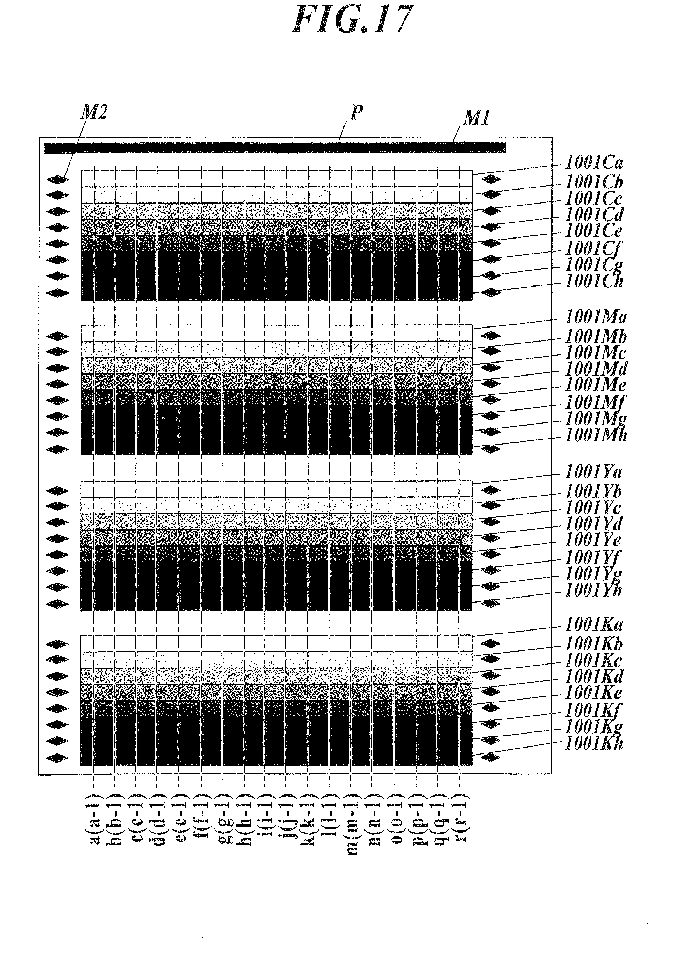

Then, the control section 10 controls the image forming section 40 to form a different gradation test pattern (Step S202) . The belt-shaped patterns formed therein are the same as the belt-shaped patterns which are formed at Step S105 in the first embodiment. However, as shown in FIG. 17, in the second embodiment, the belt-shaped patterns are formed to the left side as a whole, compared with the belt-shaped patterns formed at Step S105 in the first embodiment.

Next, the control section 10 increases a value of the counter n which indicates the number of sheets on each of which a test pattern is to be outputted (Step S203).

Then, the control section 10 judges whether the value of the counter n is equal to a prescribed number N or not (Step S204). That is, the control section 10 judges whether a prescribed number of sheets (the number of sheets to be used for the density balance adjustment) on each of which the test pattern is formed is outputted or not. In the second embodiment, the prescribed number N is set to 3, for example.

When the control section 10 judges that the value of the counter n is equal to the prescribed number N (Step S204: YES) , the control section 10 moves to Step S206. When the control section 10 judges that the value of the counter n is not equal to the prescribed number N (Step S204: NO) , the control section 10 moves to Step S205.

The control section 10 sets a formation starting position of each belt-shaped pattern in a test pattern on a sheet which is outputted next so as to be shifted for *β* mm in the main-scanning direction (Step S205) . The *β*, which is a distance for which the formation starting position is shifted, is a value obtained by dividing the measurement-distance α of the image density measurement section 805 by the prescribed number N which is the number of sheets to be used for the density balance adjustment.

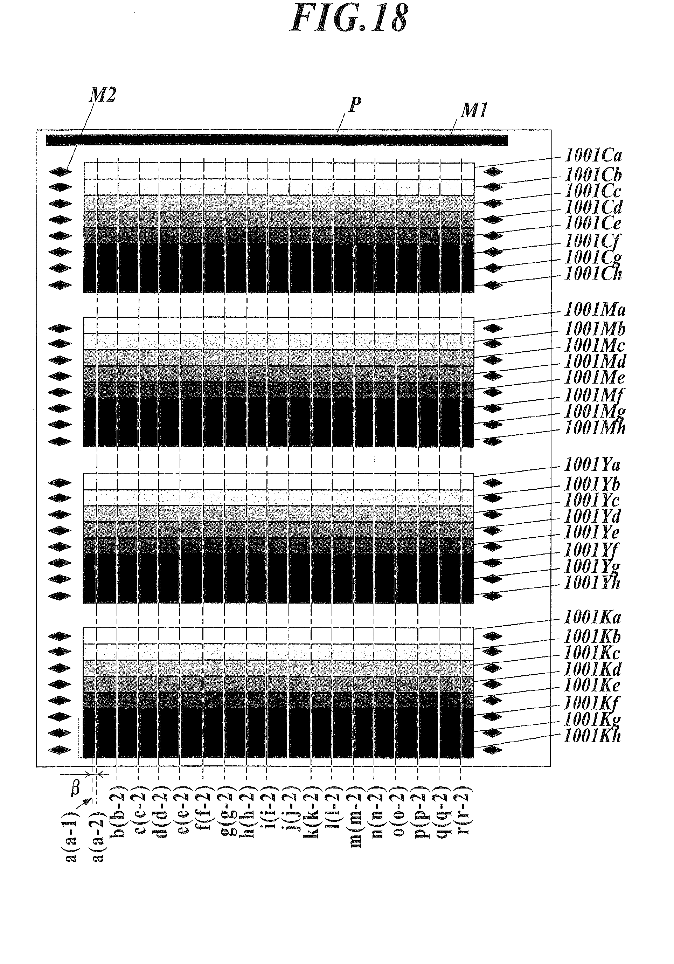

The control section 10 returns to Step S202 so as to form the belt-shaped patterns on the second sheet. As shown in FIG. 18, the formation starting position of each belt-shaped pattern formed on the second sheet is shifted for *β* mm, namely, α/3 mm, in the main-scanning direction from the formation starting position of each belt-shaped pattern formed on the first sheet.

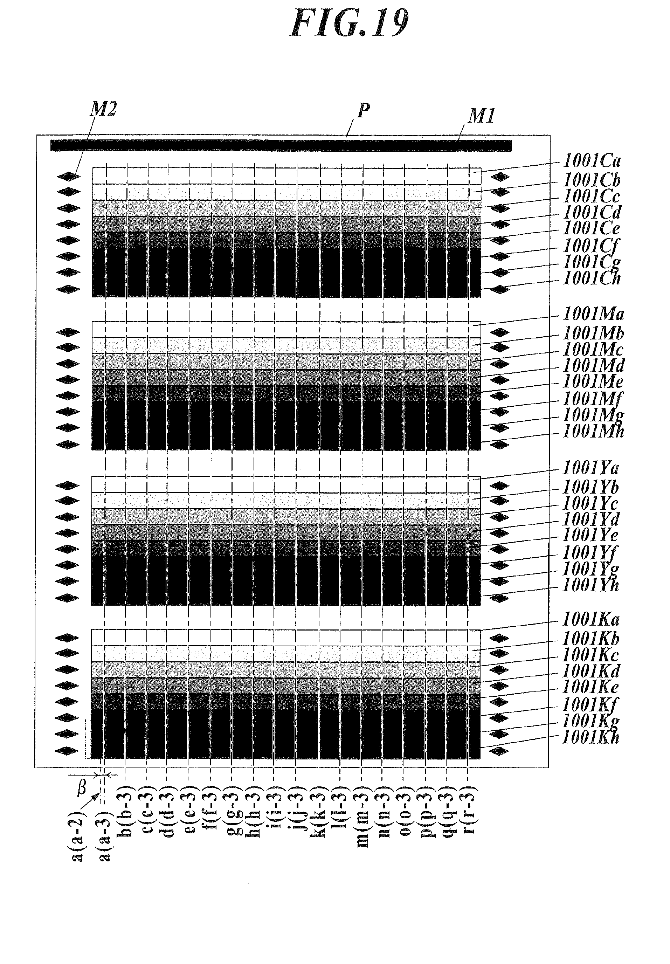

Similarly, the control section 10 forms the belt-shaped patterns on the third sheet. As shown in FIG. 19, the formation starting position of each belt-shaped pattern formed on the third sheet is shifted for *β* mm, namely, α/3 mm, in the main-scanning direction from the formation starting position of each belt-shaped pattern formed on the second sheet.

After the test pattern is formed on the first, second, and third sheets, the color measurement device 800 allows the image density measurement section 805 to measure a density profile sheet by sheet, and transmits the result of the measurement as image density information to the image forming apparatus 1 (Step S206).

The more specific explanation thereof is made referring to FIG. 17. When a sheet is carried by the sheet carry path 804, and the image density measurement section 805 reads the start mark M1 so that the starting position of a test pattern is recognized, the color measurement device 800 carries the sheet and moves the image density measurement section 805 in such a way that the image density measurement section 805 is above a POS marker M2 among the plurality of POS markers M2 formed on the sheet, the POS marker M2 which is a top POS marker M2 on the left side on the sheet (left-top POS marker M2). When the image density measurement section 805 reads the left-top POS marker M2, the color measurement device 800 moves the image density measurement section 805 to the measurement starting position (measurement position a) to which there is a prescribed distance from the left-top POS marker M2 in the main-scanning direction. Thereafter, the color measurement device 800 allows the image density measurement section 805 to measure the density of the belt-shaped pattern 1001Ca at the measurement position a thereon, the belt-shaped pattern 1001Ca which is arranged so as to be in line with the left-top POS marker M2 in the main-scanning direction. Then, the color measurement device 800 moves the image density measurement section 805 for the prescribed measurement-distance α, so that the image density measurement section 805 also measures the density at the measurement positions b to r. The a to r in FIG. 6 indicate the measurement positions in relation to the POS markers M2. When a POS marker M2 at the top on the right side is read by the image density measurement section 805, the color measurement device 800 moves the image density measurement section 805 to a POS marker M2 on the second row on the left side. Similarly, the color measurement device 800 allows the image density measurement section 805 to measure the density of the belt-shaped pattern 1001Cb at each of the measurement positions a to r thereon, thereafter. The color measurement device 800 performs this operation with regard to all the belt-shaped patterns 1001Ca to 1001Ch, 1001Ma to 1001Mh, 1001Ya to 1001Yh, and 1001Ka to 1001Kh formed on the sheet.

Similarly, the color measurement device 800 measures the density of each of the belt-shaped patterns 1001 on the second and third sheets. The belt-shaped patterns 1001 on the second sheet and the belt-shaped patterns 1001 on the third sheet are formed so as to be respectively shifted for α/3 mm and 2 α /3 mm in the main-scanning direction from the belt-shaped patterns 1001 on the first sheet. Consequently, the positional relationship of the measurement positions a to r to the POS markers M2 is the same on any one of the sheets. However, the measurement positions a to r are arranged at different positions on each of the sheets when the sheets are compared with each other. In order to show the positional relationship of the measurement positions to each of the sheets, the measurement positions a to r on the first, second, and third sheets are also indicated as the measurement positions a-1 to r-1 on the first sheet shown in FIG. 17, as the measurement positions a-2 to r-2 on the second sheet shown in FIG. 18, and as the measurement positions a-3 to r-3 on the third sheet shown in FIG. 19.

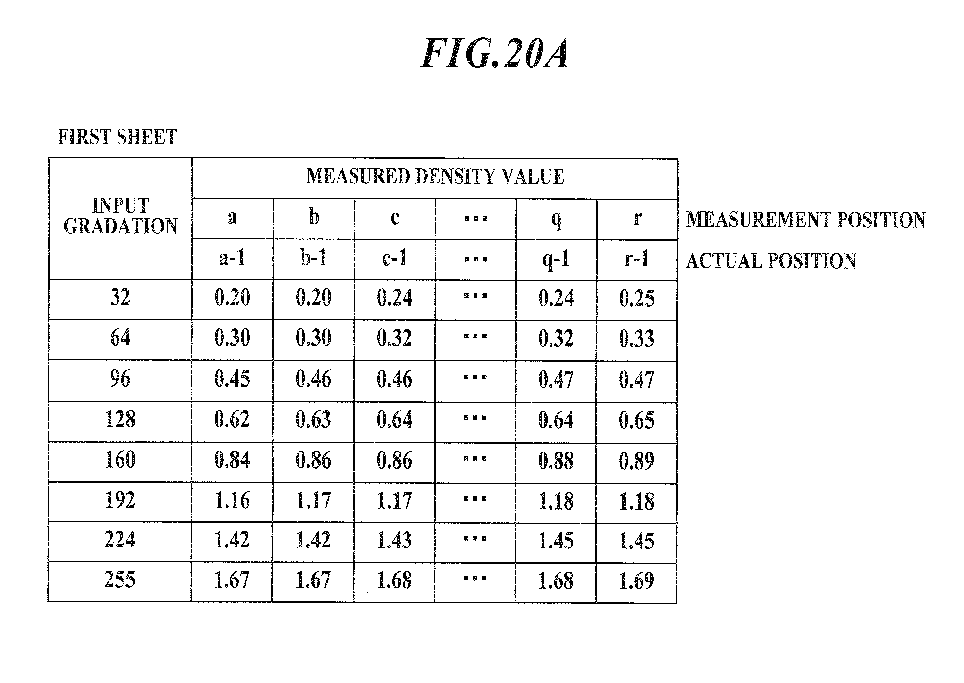

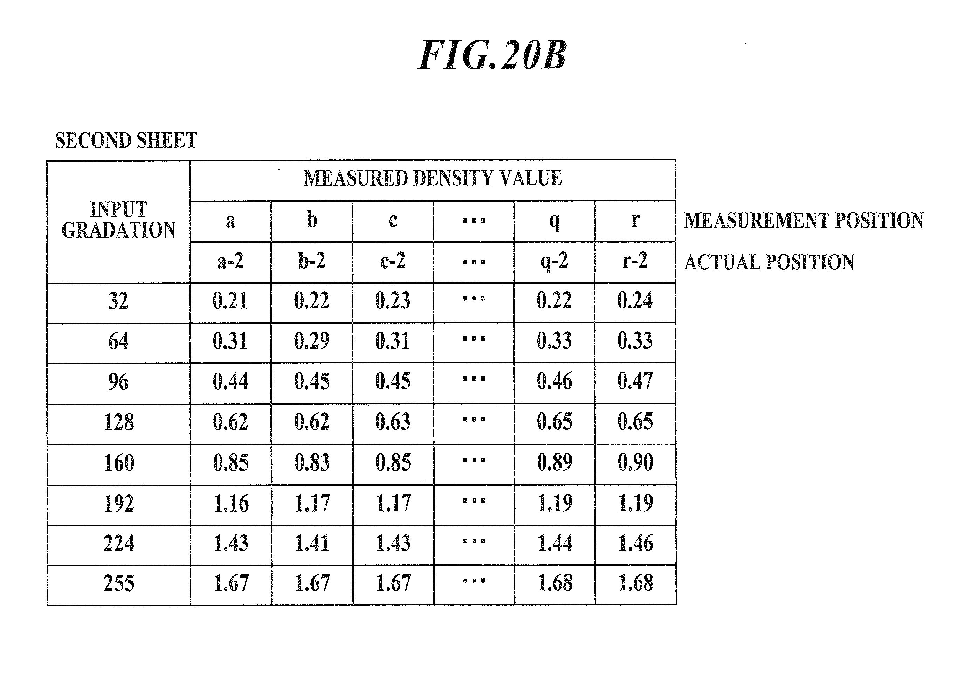

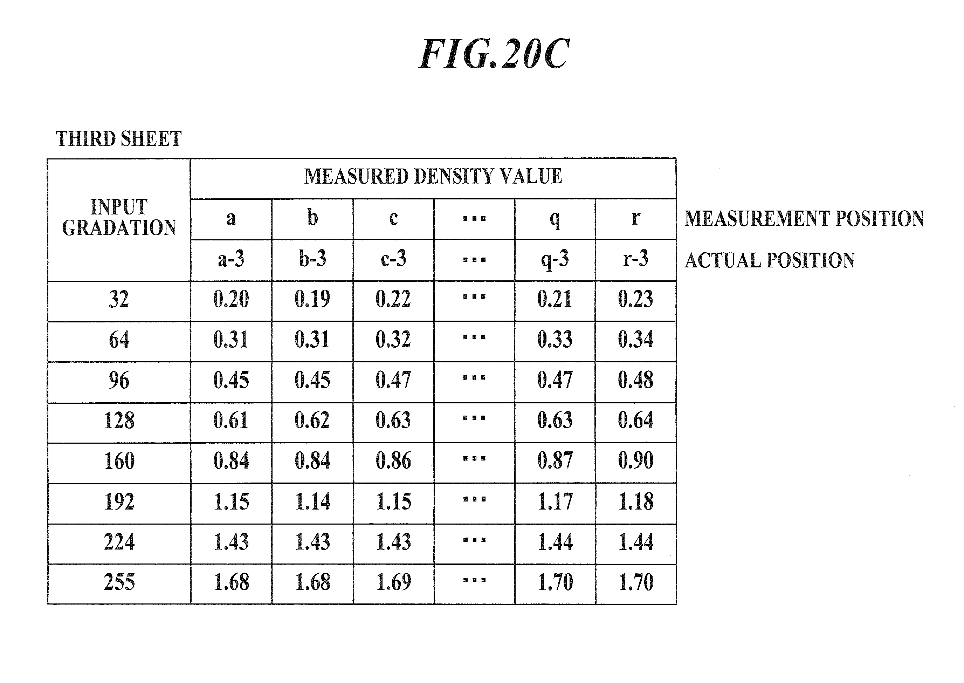

As shown in FIGs. 20A to 20C, the color measurement device 800 obtains the measured density values of the belt-shaped patterns 1001 at the measurement positions a to r on the first, second, and third sheets. The measured density values shown in FIGs . 20A to 20C are the measured density values of the black belt-shaped patterns 1001. The measured density values of the other colors' belt-shaped patterns 1001 are also obtained similarly.

The color measurement device 800 transmits the image density information sheet by sheet, the image density information which shows the measured density values of the belt-shaped patterns 1001 at the measurement positions a to r, to the image forming apparatus 1, the measured density values which are measured in the above-described manner.

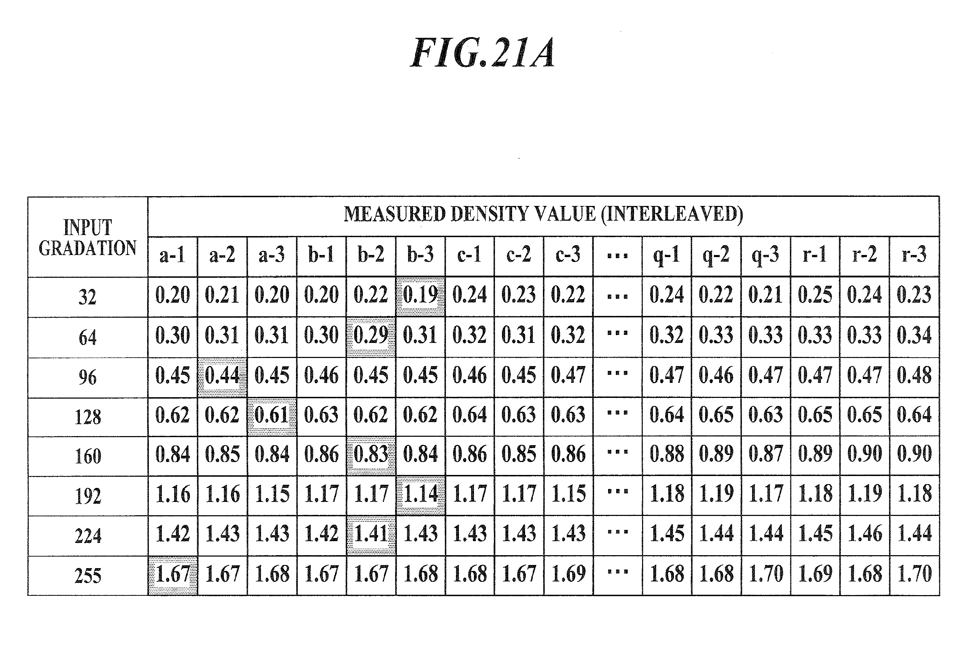

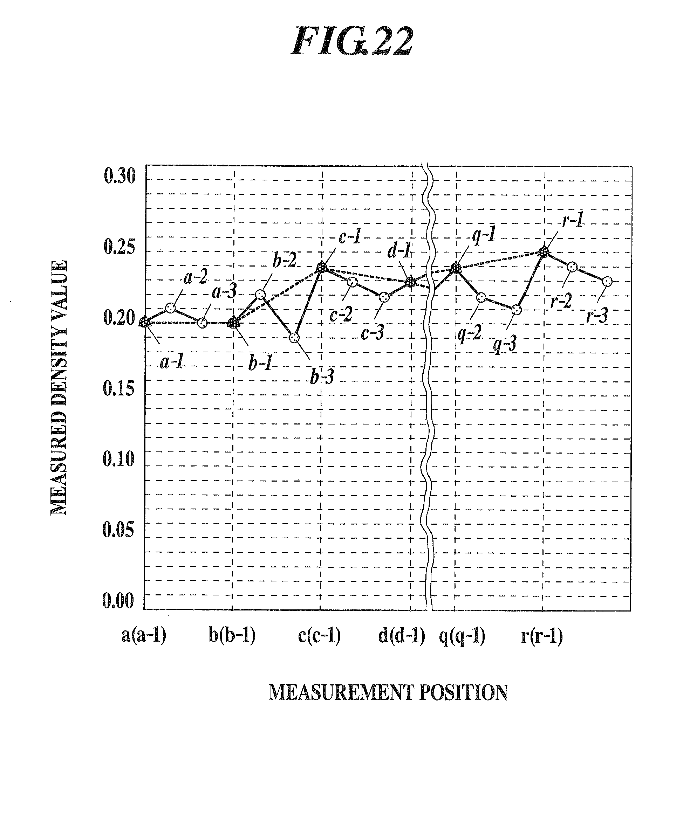

Next, the control section 10 of the image forming apparatus 1 interleaves, based on the image density information, the density profiles, namely, the measured density values, of the belt-shaped patterns 1001 at the measurement positions a to r on the sheets so that the density profiles on the sheets are expanded on one table (Step S207) . More specifically, the control section 10 expands the measured density values of the belt-shaped patterns 1001 at the measurement positions a to r on the sheets on a prescribed table in such a way that the positional relationship of the measurement positions a to r to each of the sheets is identified. Consequently, with regard to the black belt-shaped patterns 1001Ka to 1001Kh, the table shown in FIG. 21A is obtained. The measured density values expanded in the table can be expressed by a graph. For example, the measured density values of the black input gradation value 32 belt-shaped pattern 1001Ka can be expressed by the graph shown in FIG. 22. In FIG. 22, the vertical axis indicates the measured density values, and the horizontal axis indicates the measurement positions. In addition, in FIG. 22, the solid line plotted with circles indicates the measured density values obtained by using three sheets in the second embodiment, and the circles indicate the measurement positions. Moreover, in FIG. 22, the broken line plotted with triangles indicates the measured density values obtained by using only one sheet, and the triangles indicate the measurement positions. As it is obvious by FIG. 22, according to the second embodiment, a more detailed measurement result can be obtained by measuring the density by using three sheets as compared with a measurement result obtained by measuring the density by using only one sheet. The same process is performed for the cyan, magenta, and yellow belt-shaped patterns 1001.

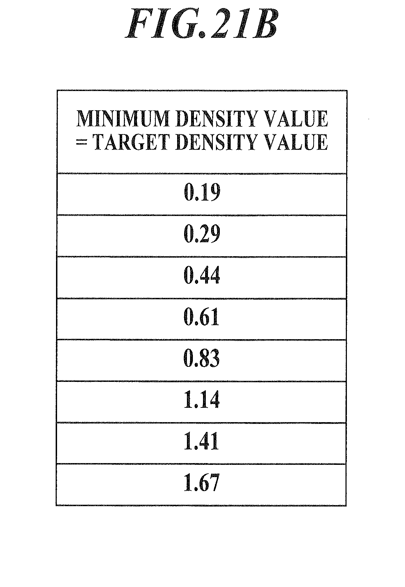

Next, the control section 10 detects the minimum density value which indicates the minimum density based on the table obtained at Step S207 for each color and gradation (Step S208) . More specifically, the control section 10 compares the interleaved measured density values at the measurement positions a-1 to r-3 shown in FIG. 21A with each other for each color and gradation so as to detect the minimum density value for each color and gradation. As for the black belt-shaped patterns 1001, the minimum density value for each gradation is shown by shading in FIG. 21A. The minimum density values of the black input gradation values 32, 64, 96, 128, 160, 192, 224, and 255 belt-shaped patterns 1001Ka to 1001Kh are 0.19 at the measurement position b-3, 0.29 at the measurement position b-2, 0.44 at the measurement position a-2, 0.61 at the measurement position a-3, 0.83 at the measurement position b-2, 1.14 at the measurement position b-3, 1.41 at the measurement position b-2, and 1.67 at the measurement position a-1, respectively. As shown in FIG. 21B, the minimum density value for each gradation is used as the target density value for each gradation at Step S209 described below.

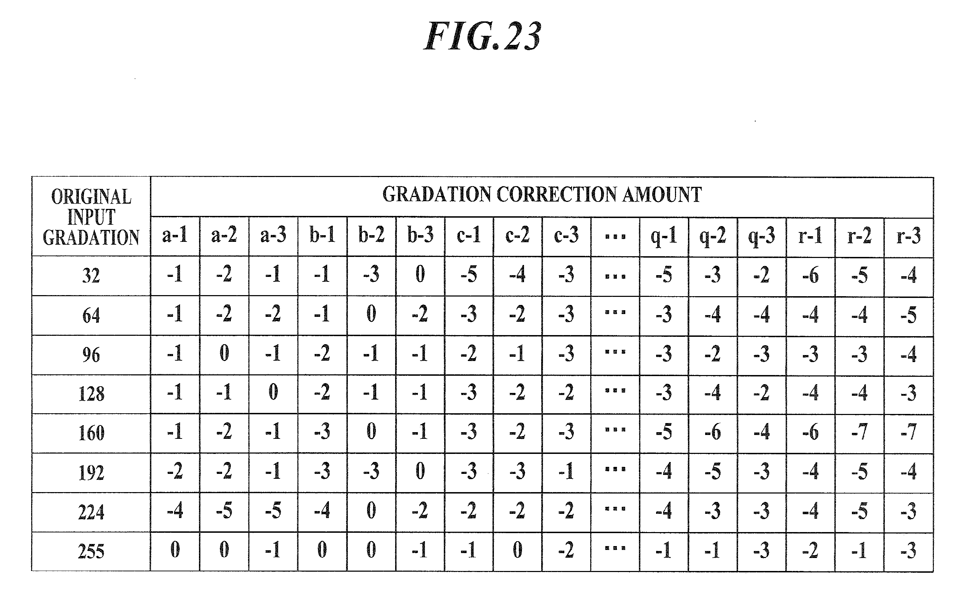

Next, the control section 10 obtains a difference (first error) between each of the measured density values shown in FIG. 21A and its minimum density value detected at Step S208, the minimum density value which is the target density value, and calculates a gradation correction value based thereon for each color and gradation (Step S209) . Step 209 is the same as Step S108 in the first embodiment, so that the detailed explanation thereof is omitted. As a result of taking Step S209, the control section 10 creates, for example, a table with regard to the black belt-shaped patterns 1001Ka to 1001Kh as shown in FIG. 23, the table in which the gradation correction amounts are set, and stores the table in the RAM 12, the HDD 14, or the like. Similarly, tables with regard to cyan, magenta, and yellow belt-shaped patterns 1001 are created, the tables on each of which the gradation correction amounts are set.

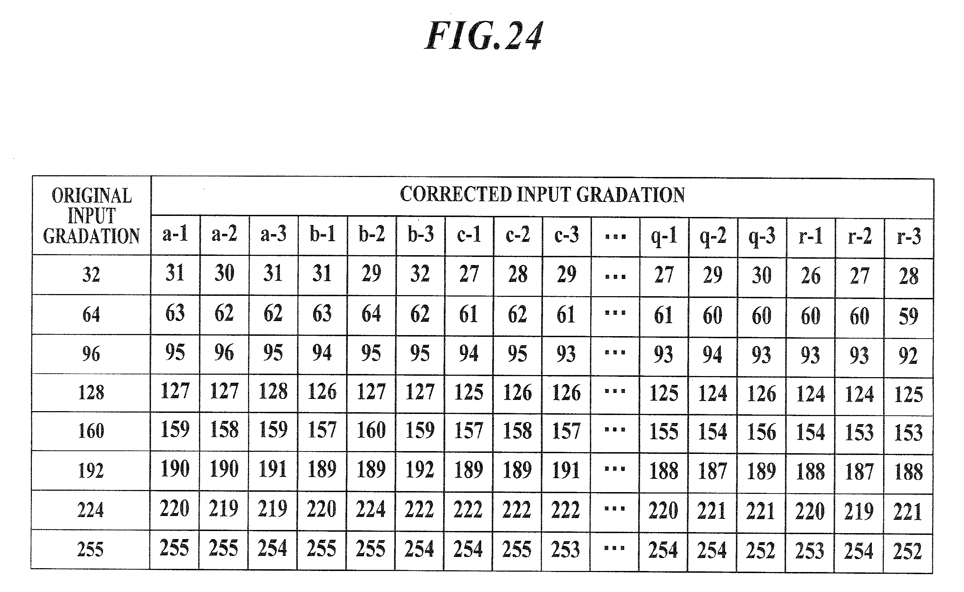

When image data is inputted from the image reading section 30, a host device, or the like, the control section 10 refers to the table created at Step S209, and adjusts the density balance for each gradation (Step S210) . Step S210 is the same as Step S109 in the first embodiment, so that the detailed explanation thereof is omitted. As a result of taking Step S210, when a black image is formed, the image is formed by using the corrected input gradations shown in FIG. 24, for example. Similarly, when cyan, magenta, and yellow images are formed, the images are formed by using corrected input gradations for their respective colors.

In the second embodiment, the density balance is adjusted by using three sheets. That is, a test pattern is outputted on three sheets in such a way that the test pattern is shifted in the main-scanning direction for a distance sheet by sheet, the distance which is obtained by dividing the measurement-distance of the image density measurement section 805 of the color measurement device 800 by the number of sheets to be used, the measurement results are interleaved, and the density balance is adjusted based the interleaved measurement result. However, the number of sheets to be used can be optionally set. The more sheets are used, the shorter the actual measurement-distance becomes, so that the accuracy of the correction can be improved.

The image-forming process condition may be changed in the second embodiment too, as described in the first embodiment.

The gradation correction amounts at between the measurement positions a-1 to r-3 may be set in the second embodiment too, by performing the interpolation processing as described in the first embodiment.

In the second embodiment, the density balance is adjusted by outputting the different gradation test pattern on a plurality of sheets. However, the density balance may be adjusted by outputting the maximum gradation test pattern on a plurality of sheets in the second embodiment too.

In the second embodiment, the densities of the belt-shaped patterns are measured by the color measurement device 800. However, the densities thereof may be measured by the image forming apparatus 1. In this case, the image density measurement section 60 or the image reading device 30 of the image forming apparatus 1 can be used therefor.

As described above, according to the first and the second embodiments of the present invention, the image forming section 40 forms the belt-shaped patterns 1001 on the paper P, the belt-shaped patterns each of which has a specific gradation and a prescribed length extending in the main-scanning direction. Then, the control section 10 receives a plurality of pieces of density information. Each piece of density information indicates the density of one of the belt-shaped patterns 1001 at one of the measurement positions a to e (a-1 to r-3), the belt-shaped patterns which are formed on the paper P. After that, the control section 10 detects the minimum density from among the received pieces of density information. Then, the control section 10 sets the detected minimum density as the target density, and identifies a first error between the target density, which is set, and each of densities respectively indicated by the received pieces of density information. Next, the control section 10 sets a gradation correction amount at each of the measurement positions based on the respective first identified errors, the measurement positions respectively corresponding to the received pieces of density information. Then, the control section 10 corrects the gradation of image data based on the set gradation correction amounts. The image forming section 40 forms an image on the paper P based on the image data of which the gradation is corrected. As a result, the density balance can be appropriately adjusted at the maximum gradation too.

According to the first embodiment, the control section 10 identifies a second error between a prescribed standard density and the minimum density obtained from received pieces of density information. Then, the control section 10 changes the setting of the image-forming process at the image forming section 40 based on the second error. As a result, even when a gradation is corrected, an image can be formed while the image quality can be maintained, the image quality which an image forming apparatus originally possesses.

According to the first and the second embodiments, the image forming section 40 includes: the photosensitive drums 401Y, 401M, 401C, and 401K which hold toner images; the laser diodes 404Ya, 404Ma, 404Ca, and 404Ka to which the photosensitive drums 401Y, 401M, 401C, and 401K are exposed, respectively, so as to form electrostatic latent images; and the developing devices 402Y, 402M, 402C, and 402K which develop the formed electrostatic latent images by using the developer. The control section 10 changes the setting of the image-forming process by changing the output amounts of the laser diodes 404Ya, 404Ma, 404Ca, and 404Ka. Consequently, the setting of the image-forming process can be changed by a simple and easy way.

According to the first and the second embodiments, the image forming section 40 includes: the photosensitive drums 401Y, 401M, 401C, and 401K which hold toner images; the electrifiers 403Y, 403M, 403C, and 403K which electrify the photosensitive drums 401Y, 401M, 401C, and 401K, respectively; the laser diodes 404Ya, 404Ma, 404Ca, and 404Ka to which the electrified photosensitive drums 401Y, 401M, 401C, and 401K, are exposed, respectively, so as to form electrostatic latent images; and the developing devices 402Y, 402M, 402C, and 402K which develop the formed electrostatic latent images by using the developer. The control section 10 changes the setting of the image-forming process by changing electrification voltages of the electrifiers 403Y, 403M, 403C, and 403K to the photosensitive drums 401Y, 401M, 401C, and 401K, respectively. Consequently, the setting of the image-forming process can be changed by a simple and easy way.

According to the first embodiment of the present invention, the image density measurement section 60 measures the density of the belt-shaped patterns 1001 at the plurality of measurement positions a to e thereon, the belt-shaped patterns which are formed on the paper P. Then, the image density measurement section 60 outputs the density information as the result of the measurement. Thereafter, the control section 10 receives the density information outputted from the image density measurement section 60. Consequently, the density measurement can be easily performed, so that the convenience of users can be increased.

According to the first embodiment of the present invention, the image density measurement section 60 includes the light source 601 and the CCD 602. The image density measurement section 60 makes the light L, which is outputted from the light source 601, reflected by the belt-shaped patterns 1001 formed on the paper P so that the reflected light L enters the CCD 602. The image density measurement section 60 measures the amount of the light L which enters the CCD 602, and thereby the densities of the belt-shaped patterns 1001 formed on the paper P are measured at the measurement positions a to e, respectively. Consequently, a highly accurate density measurement can be performed.

According to the first embodiment of the present invention, the image forming apparatus 1 includes the carrying section 420 which carries the paper P on which an image is formed. The image density measurement section 60 measures the densities of the belt-shaped patterns 1001 formed on the paper P which is being carried by the carrying section 420. Consequently, the density measurement is performed before the paper P is ejected from the image forming apparatus 1, so that the operation efficiency in the density balance adjustment can be improved.

According to the second embodiment of the present invention, the image forming apparatus 1 is capable of communicating with the color measurement device 800 which reads the belt-shaped patterns 1001 formed on the paper P; measures the densities of the belt-shaped patterns 1001 at the plurality of measurement positions (a-1 to r-1, a-2 to r-2, and a-3 to r-3 ) thereon; and outputs the result of the measurement as the image density information. The control section 10 of the image forming apparatus 1 receives the image density information outputted from the color measurement device 800. Consequently, the density measurement can be easily performed, so that the convenience of users can be increased.

According to the first and the second embodiments of the present invention, the maximum gradation (255) is set as the specific gradation from among gradations (0 to 255) which are able to be set. Consequently, the accuracy of the density balance adjustment at the maximum gradation can be increased.

According to the first and the second embodiments, the image forming section 40 forms the belt-shaped patterns (1001Ya to 1001Yh, 1001Ma to 1001Mh, 1001Ca to 1001Ch, and 1001Ka to 1001Kh) having gradations different from each other (input gradation values 32, 64, 96, 128, 160, 192, 224, and 255) on the paper P. The control section 10, with regard to each gradation and each color, receives the plurality of pieces of density information, detects the minimum density, sets the target density, identifies the first error between the target density and each of densities respectively indicated by the received pieces of density information, sets the gradation correction amount, and corrects the gradation of image data. Consequently, the density balance can be adjusted gradation by gradation, so that the accuracy of the density balance adjustment can be further improved.

According to the first and the second embodiments of the present invention, the control section 10 interpolates gradation correction amounts at between the measurement positions a to e (a-1 to r-3) respectively corresponding to the received pieces of density information, and thereby sets the gradation correction amounts at positions other than the measurement positions a to e (a-1 to r-3). Consequently, the accuracy of the density balance adjustment can be further increased.

The embodiments are examples of the image forming apparatus of the present invention, and hence are not intended to limit the scope of the present invention. The detailed structures and the detailed operations of the sections and the like of the image forming apparatus of the present invention can be appropriately changed.

In the embodiments of the present invention, there may be a case where a spike-like striped noise appears at some positions on sheets, for example, owing to scratches on the surface of the photosensitive drums and/or on the surface of the developing rollers of the developing devices, and when the density is measured at such positions, the result of the measurement may deviate from the result of the measurement obtained by measuring the density at the other positions. When such a case happens, the density balance can be appropriately adjusted by removing the deviated result of the measurement from the subjects for the detection of the target density values.

In the embodiments of the present invention, the image forming apparatus which performs four color printing is used. However, the present invention can be also applied to an image forming apparatus which performs single color printing.

In the embodiments of the present invention, a HDD, a semiconductor nonvolatile memory, or the like is used for the computer readable recording medium which stores the programs of the present invention. However, this is not a limit. For example, a portable recording medium such as a CD-ROM can be used for the computer readable recording medium. Furthermore, a carrier wave can be used as a medium which provides the data of the programs of the present invention via a communication line.

## Claims

1. An image forming apparatus comprising:
an image forming section which forms a belt-shaped pattern on a sheet, the belt-shaped pattern having a specific gradation and a prescribed length extending in a main-scanning direction; and
a control section which (i) receives a plurality of pieces of density information each of which indicates a density of the belt-shaped pattern at a measurement position of a plurality of measurement positions, the belt-shaped pattern being formed on the sheet, (ii) detects a minimum density from the received pieces of density information, (iii) sets the detected minimum density as a target density, (iv) identifies a first error between the set target density and each of densities respectively indicated by the received pieces of density information, (v) sets a gradation correction amount at each of the measurement positions based on the respective first errors, the measurement positions respectively corresponding to the received pieces of density information, and (vi) corrects a gradation of image data based on the set gradation correction amounts, wherein
the image forming section forms an image on a sheet based on the image data of which the gradation is corrected.

2. The image forming apparatus according to claim 1, wherein the control section identifies a second error between a prescribed standard density and the detected minimum density, which is detected from the received pieces of density information, and changes a setting of an image-forming process at the image forming section based on the second identified error.

3. The image forming apparatus according to claim 2,
wherein
the image forming section includes:
an image holder which holds a toner image;
a light source to which the image holder is exposed so that an electrostatic latent image is formed; and
a developing section which develops the formed electrostatic latent image by using developer, and
the control section changes the setting of the image-forming process by changing an amount of light outputted from the light source.

4. The image forming apparatus according to claim 2,
wherein
the image forming section includes:
an image holder which holds a toner image;
an electrifier which electrifies the image holder;
a light source to which the electrified image holder is exposed so that an electrostatic latent image is formed; and
a developing section which develops the formed electrostatic latent image by using developer, and the control section changes the setting of the image-forming process by changing an electrification voltage of the electrifier to electrify the image holder.

5. The image forming apparatus according to any one of claims 1 to 4 further comprising:
an image density measurement section which measures the density of the belt-shaped pattern formed on the sheet at each of the measurement positions, and outputs the pieces of density information as a result of the measurement, wherein
the control section receives the pieces of density information outputted from the image density measurement section.

6. The image forming apparatus according to claim 5,
wherein
the image density measurement section includes:
a measurement light source; and
a light receiving section, wherein
light outputted from the measurement light source is inputted into the light receiving section by reflecting the light by the belt-shaped pattern formed on the sheet, and the density of the belt-shaped pattern formed on the sheet is measured at each of the measurement positions by measuring an amount of the light inputted into the light receiving section.

7. The image forming apparatus according to any one of claims 5 and 6 further comprising:
a carrying section by which a sheet is carried, the sheet on which an image is formed, wherein
the image density measurement section measures the density of the belt-shaped pattern formed on the sheet which is being carried by the carrying section.

8. The image forming apparatus according to any one of claims 1 to 4, wherein
the image forming apparatus is capable of communicating with an image density measurement device which reads the belt-shaped pattern formed on the sheet, measures the density of the belt-shaped pattern at each of the measurement positions, and outputs the pieces of density information as a result of the measurement, and
the control section receives the pieces of density information outputted from the image density measurement device.

9. The image forming apparatus according to any one of claims 1 to 8, wherein the specific gradation is a maximum gradation among gradations which are capable of being set.

10. The image forming apparatus according to any one of claims 1 to 9, wherein
the image forming section forms a plurality of belt-shaped patterns on a sheet, the belt-shaped patterns having gradations different from each other, and
the control section, with regard to each of the gradations different from each other, (i) receives the pieces of density information, (ii) detects the minimum density, (iii) sets the detected minimum density as the target density, (iv) identifies the first error between the set target density and each of the densities respectively indicated by the received pieces of density information, (v) sets the gradation correction amount, and (vi) corrects the gradation of the image data.

11. The image forming apparatus according to any one of claims 1 to 10, wherein the control section interpolates a gradation correction amount into between the gradation correction amounts at the respective measurement positions which respectively correspond to the received pieces of density information, and thereby sets the gradation correction amount at a position other than the measurement positions which respectively correspond to the received pieces of density information.

12. An image density adjustment method comprising:
forming a belt-shaped pattern on a sheet, the belt-shaped pattern having a specific gradation and a prescribed length extending in a main-scanning direction;
measuring a density of the belt-shaped pattern formed on the sheet at each of a plurality of measurement positions;
detecting a minimum density from the measured densities;
setting the detected minimum density as a target density;
identifying a first error between the set target density and each of the measured densities, which are respectively measured at the measurement positions, of the belt-shaped pattern;
setting a gradation correction amount at each of the measurement positions based on the respective first errors; and
correcting a gradation of image data based on the set gradation correction amounts.

13. The image density adjustment method according to claim 12 further comprising:
identifying a second error between a prescribed standard density and the detected minimum density, which is detected from the measured densities; and
changing a setting of an image-forming process at an image forming section based on the identified second error, the image forming section which forms an image on a sheet.
